# EUROPEAN PATENT APPLICATION

(11) **EP 4 340 526 A1**
(43) Date of publication of application: **20.03.2024**
(21) Application number: 21949599.1
(22) Date of filing: 13.07.2021
(51) Int. Cl.: H04W 76/27, H04W 88/04

(54) **WIRELESS COMMUNICATION METHOD AND APPARATUS, AND TERMINAL DEVICE**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN); ZHANG, Boyuan, Dongguan, Guangdong 523860 (CN)
(74) Representative: Ipside
(86) International application number: PCT/CN2021/105991
(87) International publication number: WO 2023/283804

(57) **Abstract**

Provided in embodiments of the present application are a wireless communication method and apparatus and a terminal device. The method comprises: after receiving a first message sent by a second terminal, a first terminal sends the first message or a first report to a network device; the first terminal receives first indication information sent by the network device, the first indication information being used for indicating a first identifier; and the first terminal determines that an adaptation layer identifier of the second terminal is the first identifier on the basis of the first indication information.

## Description

### TECHNICAL FIELD

Embodiments of the present disclosure relates to a technical field of the mobile communication, in particular to, methods and devices for wireless communication and a terminal device.

### BACKGROUND

In a Layer-2 terminal-to-network relay architecture, the communication data between a remote User Equipment (UE) and a base station is forwarded by a relay UE. Multiple remote UEs may be connected to the same relay UE simultaneously; and the Layer-2 relay architecture requires the base station to distinguish the data from different remote UEs. For this reason, the 3rd generation partnership project (3GPP) decides that the remote UE needs to be associated with an adaptation layer identity (ID); and both the relay UE and the base station know the correspondence between the adaptation layer ID and the remote UE. The data packets between the relay UE and the base station all carry the adaptation layer ID, so that the base station can know from which remote UE the data comes, and the relay UE can also know to which remote UE the data should be forwarded.

However, at present, for the multi-hops relay network in which the remote UE accesses to the base station through multiple relay UEs, a method for allocating the adaptation layer ID of the remote UE is lacking, thereby affecting the communication between the remote UE and the network side.

### SUMMARY

Embodiments of the present disclosure provide methods and devices for wireless communication and a terminal device.

The method for wireless communication provided by the embodiments of the present disclosure includes following operations.

After a first message sent by a second terminal is received, a first terminal sends the first message or a first report to the network device.

The first terminal receives first indication information sent by the network device, where the first indication information is used for indicating a first ID.

The first terminal determines that an adaptation layer ID of the second terminal is the first ID based on the first indication information.

The method for wireless communication provided by the embodiments of the present disclosure includes following operation.

After a first message sent by a second terminal is received, the first terminal sends the first message or a first report to the network device, where the first message or the first report carries a first ID, and the first ID is an adaptation layer ID allocated by the first terminal to the second terminal.

The device for wireless communication provided by the embodiments of the present disclosure includes a sending module, a receiving module and determination module.

The sending module is configured to send a first message or a first report to a network device after the first message sent by a second terminal is received.

The receiving module is configured to receive first indication information sent by the network device, where the first indication information is used for indicating a first ID.

The determination module is configured to determine that an adaptation layer ID of the second terminal is the first ID based on the first indication information.

The device for wireless communication provided by the embodiments of the present disclosure includes a sending module.

The sending module is configured to send a first message or a first report to a network device after the first message sent by the second terminal is received, where the first message or the first report carries a first ID, and the first ID is an adaptation layer ID allocated by the first terminal for the second terminal.

The terminal device provided by the embodiments of the present disclosure may be the first terminal in the above schemes, and the terminal device includes a processor and a memory. The memory is configured to store a computer program, and the processor is configured to invoke and run the computer program stored in the memory to perform the method for wireless communication.

The chip provided by the embodiments of the present disclosure is configured to implement the method for wireless communication.

In particular, the chip includes a processor configured to invoke and run a computer program from a memory, to cause a device on which the chip is mounted to perform the method for wireless communication described above.

Embodiments of the present disclosure provide a computer-readable storage medium configured to store a computer program that causes a computer to perform the method for wireless communication.

A computer program product provided by embodiments of the present disclosure includes computer program instructions that cause a computer to perform the method for wireless communication described above.

The computer program provided by embodiments of the present disclosure causes the computer to perform the method for wireless communication when running on the computer.

According to the technical schemes, when an adaptation layer ID, i.e., the first ID, is needed to be allocated for the second terminal in the multi-hops relay network, the first message is sent to the first terminal; after the first message is received, the first terminal sends the first message or a first report to the network device to request the first ID allocated by the network device, or request the network device to allocate the first ID to the second terminal; and the first terminal sends the allocated first ID to the network device, thereby completing the allocation of the adaptation layer ID to the second terminal in the multi-hop relay network.

### BRIEF DESCRIPTION OF THE DRAWINGS

The drawings described herein are used to provide a further understanding of the present disclosure and form a part of the present disclosure. The schematic embodiments of the present disclosure and the description thereof are used to explain the present disclosure and do not constitute an improper limitation of the present disclosure. In the drawings:
FIG. 1 is a schematic diagram of an optional application scenario of an embodiment of the present disclosure;
FIG. 2 is a schematic diagram of an optional application scenario of an embodiment of the present disclosure;
FIG. 3 is a schematic diagram of an optional protocol stack of an embodiment of the present disclosure;
FIG. 4 is an optional flowchart of a method for wireless communication according to an embodiment of the present disclosure;
FIG. 5 is an optional flowchart of a method for wireless communication according to an embodiment of the present disclosure;
FIG. 6A is an optional flowchart of a method for wireless communication according to an embodiment of the present disclosure;
FIG. 6B is an optional flowchart of a method for wireless communication according to an embodiment of the present disclosure;
FIG. 7 is an optional flowchart of a method for wireless communication according to an embodiment of the present disclosure;
FIG. 8 is an optional flowchart of a method for wireless communication according to an embodiment of the present disclosure;
FIG. 9 is an optional flowchart of a method for wireless communication according to an embodiment of the present disclosure;
FIG. 10 is an optional flowchart of a method for wireless communication according to an embodiment of the present disclosure;
FIG. 11 is an optional flowchart of a method for wireless communication according to an embodiment of the present disclosure;
FIG. 12 is an optional structural diagram of a device for wireless communication according to an embodiment of the present disclosure;
FIG. 13 is an optional structural diagram of a device for wireless communication according to an embodiment of the present disclosure;
FIG. 14 is a schematic structural diagram of a communication device according to an embodiment of the present disclosure;
FIG. 15 is a schematic structural diagram of a chip according to an embodiment of the present disclosure; and
FIG. 16 is a schematic block diagram of a communication system according to an embodiment of the present disclosure.

### DETAILED DESCRIPTION

The technical schemes of the embodiments of the present disclosure will be described below in combination with the accompanying drawings of the embodiments of the present disclosure. It is apparent that the described embodiments are only part, rather than all, of the embodiments of the present disclosure. Based on the embodiments in the present disclosure, all other embodiments acquired by those skilled in the art without involving any inventive effort shall fall within the scope of protection of the present disclosure.

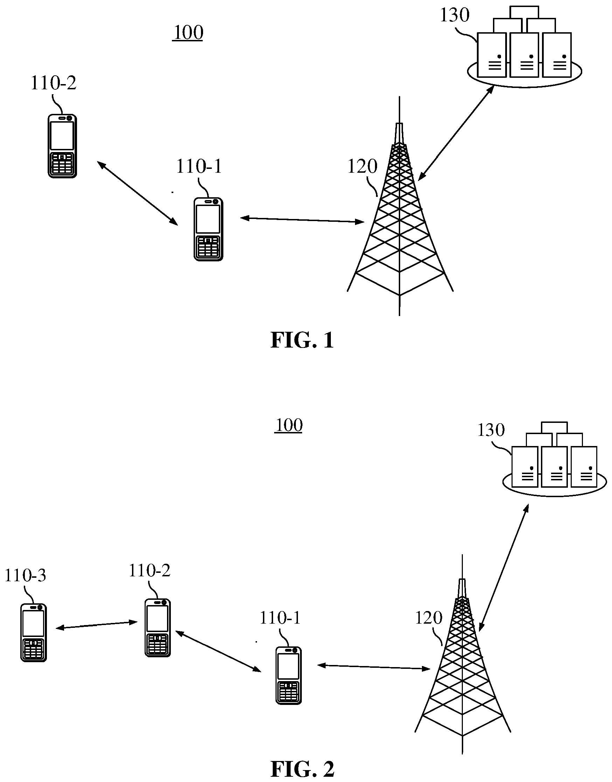

FIG. 1 is a diagram of a scenario to which a communication method is applied according to an embodiment of the present disclosure.

As shown in FIG. 1, the communication system 100 may include a terminal device 110 (including a terminal device 110-1 and a terminal device 110-2) and a network device 120. The network device 120 may communicate with the terminal device 110-1 through an air interface. Multi-service transmission is supported between the terminal device 110-1 and the network device 120. The terminal device 110-2 communicates with the network device 120 through the terminal device 110-1. The terminal device 110-1 is a relay UE and the terminal device 110-2 is a remote UE.

It should be understood that the embodiments of the present disclosure are only illustrative with the communication system 100 but are not limited thereto. That is to say, the technical schemes of the embodiments of the present disclosure can be applied to various communication systems, such as: a long term evolution (LTE) system, a LTE time division duplex (TDD), an universal mobile telecommunications system (UMTS), an internet of things (IoT) system, a narrow band internet of things (NB-IoT) system, an enhanced machine-type communications (eMTC) system, a 5G communication system (also referred to as a New Radio (NR) communication system), or future communication system, etc.

In the communication system 100 shown in FIG. 1, the network device 120 may be an access network device that communicates with the terminal device 110. The access network device may provide communication coverage for a particular geographic area and may communicate with a terminal device 110 (e.g. a UE) located within the coverage.

The network device 120 may be an Evolved Node B (also called as eNB or eNodeB) in the LTE system, or a next generation radio access network (NG RAN) device, or a base station (gNB) in the NR system, or a wireless controller in a cloud radio access network (CRAN), or the network device 120 may be a relay station, an access point, a vehicle-mounted device, a wearable device, a hub, a switch, a bridge, a router, or a network device in a future evolved public land mobile network (PLMN), etc.

The terminal device 110 may be any terminal device including, but not limited to, a terminal device in wired or wireless connection with the network device 120 or other terminal devices.

For example, the terminal device 110 may be an access terminal, a UE, a subscriber unit, a subscriber station, a mobile station, a remote station, a remote terminal, a mobile device, a user terminal, a terminal, a wireless communication device, a user agent, or a user device. The access terminal may be a cellular telephone, a cordless telephone, a session initiation protocol (SIP) telephone, an IoT device, a satellite handheld terminal, a wireless local loop (WLL) station, a personal digital assistant (PDA), a handheld device having a wireless communication function, a computing device or other processing device connected to a wireless modem, a vehicle-mounted device, a wearable device, a terminal device in a 5G network or a terminal device in a future evolution network, etc.

The terminal device 110 may be used for the device to device (D2D) communication.

The wireless communication system 100 may also include a core network device 130 that communicates with the base station. The core network device 130 may be a 5G core (5GC) device, for example, an access and mobility management function (AMF), for another example, an authentication server function (AUSF), for another example, a User Plane Function (UPF), and for another example, a Session Management Function (SMF). Optionally, the core network device 130 may also be an Evolved Packet Core (EPC) device of the LTE network, for example, a session management function+core packet gateway (SMF+PGW-C) device. It should be understood that SMF+PGW-C can implement the functions implemented by the SMF and PGW-C. In a process of network evolution, the core network device may also be called by other names, or a new network entity may be formed by partitioning the functions of the core network, which is not limited in the embodiments of the present disclosure.

The communication between the functional units of the communication system 100 may be implemented by establishing a connection through a next generation (NG) interface.

For example, the terminal device sets up the air interface connection with the access network device through a NR interface, to transmit user plane data and control plane signaling. The terminal device may set up a control plane signaling connection with an AMF through an NG interface 1 (abbreviated as N1). The access network device, such as the gNB, may set up a user plane data connection with a UPF through an NG interface 3 (abbreviated as N3). The access network device may set up control plane signaling connection with the AMF through a NG interface 2 (abbreviated as N2). The UPF may set up the control plane signaling connection with a SMF through a NG interface 4 (abbreviated as N4). The UPF may interact user plane data with a data network through a NG interface 6 (abbreviated as N6). The AMF may set up the control plane signaling connection with the SMF through a NG interface 11 (abbreviated as N11). The SMF may set up the control plane signaling connection with a PCF through a NG Interface 7 (abbreviated as N7).

FIG. 1 exemplarily illustrates one base station, one core network device and two terminal devices. Optionally, the wireless communication system 100 may include multiple base station devices and other numbers of the terminal devices may be included within the coverage of each base station, which is not limited in the embodiments of the present disclosure.

It should be noted that FIG. 1 only illustrates by way of example the system to which the present disclosure applies and of course the method shown in the embodiment of the present disclosure may also be applied to other systems. In addition, the terms "system" and "network" herein are often used interchangeably herein. In this disclosure, the term "and/or" is only to describe an association relationship between associated objects and represents that three kinds of relationships may exist. For example, A and/or B may represent three conditions: i.e., independent existence of A, existence of both A and B and independent existence of B. In addition, the character "/" in the present disclosure generally indicates that the associated objects before and after this character is in an "or" relationship. It should be understood that the reference to "indication" in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B. It should also be understood that the term "correspondence" may mean that there is a direct correspondence or an indirect correspondence between the two, may also mean that there is an association relationship between the two, and may also be a relationship between indication and being indicated, configuration and being configured, etc.. It should also be understood that "predefined" or "predefined rules" may be achieved by pre-storing corresponding codes, tables or other means used for indicating relevant information in devices (e.g., including terminal devices and network devices), and the present disclosure is not limited to the specific implementation thereof. For example, predefined may refer to what is defined in the protocol. It should also be understood that, in the embodiments of the present disclosure, the "protocol" may be a standard protocol in the communication field. For example, the protocol may include an LTE protocol, an NR protocol, and related protocols applied in future communication systems, which are not limited in the present disclosure.

Based on the communication system shown in FIG. 1, as shown in FIG. 2, the communication system may further include a terminal device 110-3 that communicates with a network device 120 through a terminal device 110-1 and a terminal device 110-2. The terminal device 110-3 is a remote UE; and the terminal device 110-1 and the terminal device 110-2 are relay UEs.

In the communication system shown in FIG. 1, the remote UE communicates with the network device through one relay UE; and in FIG. 2, the remote UE communicates with the network device through two relay UEs. In practical applications, the remote UE may communicate with the network device through more relay UEs. In the embodiments of the present disclosure, the number of the relay UEs between the remote UE and the network device is not limited.

In order to facilitate understanding of the technical schemes of the embodiments of the present disclosure, the technical technology related to the embodiments of the present disclosure are described below, and the following related technologies, as optional schemes, can be arbitrarily combined with the technical schemes of the embodiments of the present disclosure, all of which belong to the protection scope of the embodiments of the present disclosure.

Before the detailed description of the methods for wireless communication provided by the embodiments of the present disclosure, the part of the UE-to-network relay technology is briefly described.

The 3GPP R17 introduces the access layer, i.e., the Layer-2 terminal-to-network relay. In the Layer-2 terminal-to-network relay, communication data between a remote UE and a base station is forwarded by a relay UE, and the relay UE routes and forwards control plane data and user plane data at the access layer. Multiple remote UEs may be connected to a same relay UE simultaneously, and the Layer-2 relay architecture requires the base station to distinguish the data from different remote UEs. For this reason, the 3GPP decides that the remote UE needs to be associated with an adaptation layer ID; and both the relay UE and the base station know the correspondence between the adaptation layer ID and the remote UE. The data packets between the relay UE and the base station all carry the adaptation layer ID, so that the base station can know from which remote UE the data comes, and the relay UE can also know to which remote UE the data should be forwarded.

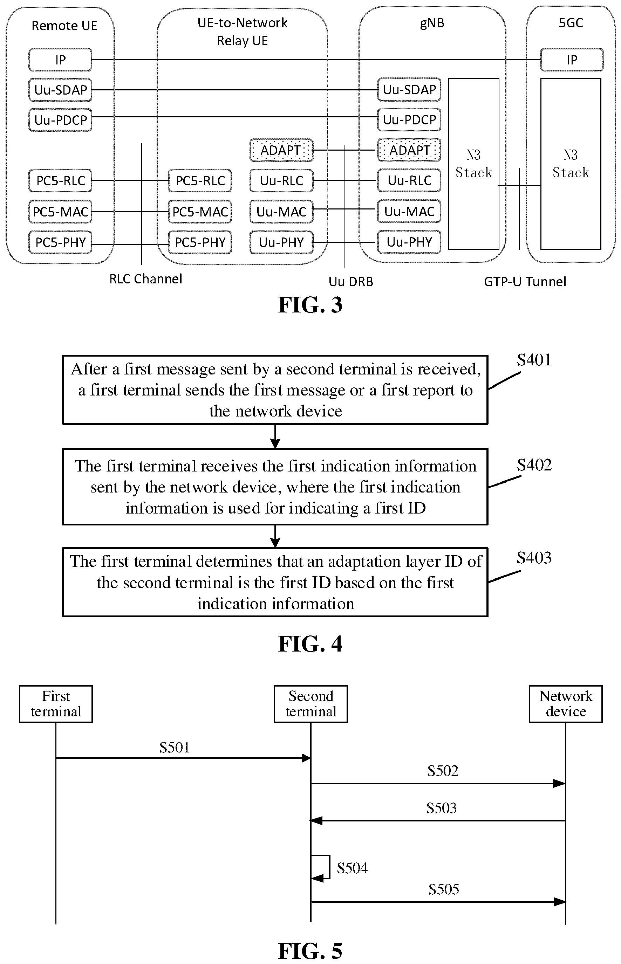

As shown in FIG. 3, an adaptation layer (ADAPT) is arranged over the radio link control (RLC) sublayer of the control plane and the user plane at the Uu interface between the relay UE and the gNB. The service data adaptation protocol (SDAP)/packet data convergence protocol (PDCP) and radio resource control (RRC) of the Uu interface terminate between the remote terminal and the gNB, while RLC, Quality of Service (QoS), media access control (MAC) and physical layer (PHY) terminate in each link (i.e. the link between the remote terminal and the relay terminal and the link between the relay terminal and the gNB).

For an uplink from the L2 UE to the network relay
- The Uu adaptation layer of the relay terminal supports accessing to the uplink bearer mapping between Proximity Communication (PC5) RLC channels for relaying the relay on UE Uu path and accessing out the Uu RLC channel. For the uplink relay service, different end-to-end bearers (such as the Signal Radio Bearer (SRB), and the Data Radio Bearer (DRB)) of the same remote UE and/or the different remote UEs may perform N: 1 mapping and data multiplexing on one Uu RLC channel.
- The Uu adaptation layer is used for supporting the remote terminal ID for the uplink service (data from multiple remote terminals is multiplexed). The Uu radio bearer and ID information of the remote terminal are included in the uplink Uu adaptation layer, so that the gNB associates reception data packets of a particular PDCP entity associated with the Uu radio bearer of the right remote terminal of the remote terminal.

For the downlink from the L2 UE to the network relay
- The Uu adaptation layer may be used for supporting the downlink bearer mapping at the gNB, to map the end-to-end radio bearer (the SRB and the DRB) of the remote terminal to the Uu RLC channel through the relay UE-Uu path. The Uu adaptation layer may be used for supporting downlink N: 1 bearer mapping and data multiplexing between multiple end-to-end radio bearers (SRBs, DRBs) of a remote terminals and/or different remote terminals and a Uu RLC channel on the Uu path of the relay UE.
- Uu adaptation layer needs to support the remote terminal ID of the downlink service. The identification information of the Uu radio bearer of the remote terminal and the ID information of the remote terminal need to be placed into the Uu adaptation layer through the gNB at the downlink, so that the relay UE maps the data packets received from the Uu radio bearer of the remote terminal to the PC5 RLC channel associated with the relay UE.

However, the related technologies do not solve the problem of how to let the relay/remote UE obtain the user ID information needed in the adaptation layer in the multi-hops network relay system.

In order to facilitate understanding of the technical schemes of the embodiments of the present disclosure, the technical schemes of the present disclosure will be described in detail below by way of specific embodiments. The above related technologies, as optional schemes, can be arbitrarily combined with the technical schemes of the embodiments of the present disclosure, all of which belong to the protection scope of the embodiments of the present disclosure. Embodiments of the present disclosure include at least part of the following content.

Embodiment of the present disclosure provides a method for wireless communication, as shown in FIG. 4, and the method includes operations S401 to S403.

In operation S401, after a first message sent by a second terminal is received, a first terminal sends the first message or a first report to the network device.

After the first terminal receives the first message, the first terminal may send the first message to the network device, and may also send the first report to the network device.

Optionally, the first message includes one of: an RRC setup request (RRCSetupRequest) message, an RRC resume request (RRCResumeRequest or RRCResumeRequest1) message, an RRC reconfiguration complete (RRCConfigurationComplete) message, and the like.

Optionally, the first report includes a sidelink UE Information message.

In some embodiments, the first terminal sets up a connection with the network device before the first terminal sends the first message or the first report to the network device.

In the embodiment of the present disclosure, the first terminal communicates with the second terminal through the PC5 interface.

In some embodiments, the first terminal is a first relay terminal and the second terminal is a second relay terminal. The first relay terminal is a relay terminal communicating with the network device through the Uu interface. In this case, the second relay terminal communicates with the network device through the first relay terminal.

In the case that the first terminal is the first relay terminal and the second terminal is the second relay terminal, in the communication system shown in FIG. 2, the first terminal is the terminal device 110-1 and the second terminal is the terminal device 110-2.

Optionally, the second relay terminal may also be connected to other relay terminals.

In an example, UE1 is connected to the network device via UE2, UE3 and UE4 in sequence. In this case, the first relay terminal is the UE4 and the second relay terminal is the UE3.

Optionally, the second relay terminal may also be connected to the remote terminal.

In an example, UE1 is connected to the network device via UE2 and UE3 in sequence. In this case, the first relay terminal is the UE3 and the second relay terminal is the UE2.

It needs to be noted that, in the case that the first terminal is the first relay terminal and the second terminal is the second relay terminal, the second relay terminal is directly connected to the remote terminal or connected to the remote terminal through other relay terminals. In this case, the first relay terminal may also receive the first message or the first report, which is sent by the second relay terminal, indicating that adaptation layer ID is requested for the remote terminal; receive the first indication information indicating the adaptation layer ID of the remote terminal; and forward the first indication information to the second relay terminal.

In some embodiments, the first terminal is a first relay terminal and the second terminal is a remote terminal.

Taking the first terminal being the first relay terminal and the second terminal being the remote terminal as an example, at least a second relay terminal is presented between the first relay terminal and the network device, and communication between the first relay terminal and the network device is forwarded at least through the second relay terminal. In the communication system shown in FIG. 2, the first terminal is the terminal device 110-2 and the second terminal is the terminal device 110-3.

Optionally, the second relay terminal is connected to the network device, i.e. the second relay terminal communicates with the network device through the Uu interface. In an example, UE1 is connected to the network device via UE2 and UE3 in sequence. In this case, the remote terminal is the UE1; the first relay terminal is the UE2; the second relay terminal is the UE3; and the UE3 is connected to the network device.

The first relay terminal sends the first message or the first report to the second relay terminal; and the second relay terminal sends the first message or the second report to the network device.

Optionally, at least a third relay terminal is presented between the second relay terminal and the network device.

In an example, UE1 is connected to the network device via UE2, UE3 and UE4 in sequence. In this case, the remote terminal is the UE1; the first relay terminal is the UE2; the second relay terminal is the UE3; and the UE3 is connected to the third relay terminal UE4.

In an example, UE1 is connected to the network device through UE2, UE3, UE4 and UE5 in sequence. In this case, the remote terminal is the UE1; the first relay terminal is the UE2; the second relay terminal is the UE3; and the third relay terminal includes the UE4 and the UE5. The UE3 is connected to the UE4, and the UE4 is connected to the UE5.

Taking one third relay terminal UE A being presented between the second relay terminal and the network device as an example, the first relay terminal sends the first message or the first report to the second relay terminal; the second relay terminal sends the first message or the first report to the UE A; and the UE A sends the first message or the first report to the network device.

Taking two third relay terminals (UE A, UE B) being presented between the second relay terminal and the network device as an example, the first relay terminal sends the first message or the first report to the second relay terminal; the second relay terminal sends the first message or the first report to the UE A; the UE A sends the first message or the first report to the UE B; and the UE B sends the first message or the first report to the network device.

In the case that one or more third relay terminals are presented between the second relay terminal and the network device, the number of the third relay terminals is not limited in the embodiment of the present disclosure.

In some embodiments, the first message does not carry an adaptation layer header; or, the first message carries the adaptation layer header, and an ID field of the adaptation layer header is set as a default value; or, the first message carries the adaptation layer header, and the ID field of the adaptation layer header is set as a second ID, and the second ID is an adaptation layer ID of the first terminal

Taking the first terminal being the first relay terminal and the second terminal being the second relay terminal as an example, the case that the first message carries the adaptation layer header includes one of following case 1A to case 1C.

In the case 1A, the first message received by the first relay terminal does not carry the adaptation layer header; or the first message received by the first relay terminal carries the adaptation layer header, and an ID field of the adaptation layer header is set as the default value.

In the case 1B, the first message sent by the first relay terminal to the network device does not carry the adaptation layer header; or the first message sent by the first relay terminal to the network device carries the adaptation layer header, and the ID field of the adaptation layer header is set as a default value.

In the case 1C, the first message sent by the first relay terminal to the network device does not carry the adaptation layer header; or the first message sent by the first relay terminal to the network device carries the adaptation layer header, and the ID field of the adaptation layer header is set as a default value; or the first message sent by the first relay terminal to the network device carries the adaptation layer header, and the ID field of the adaptation layer header is set as a second ID.

Taking the first terminal being the first relay terminal and the second terminal being the remote terminal as an example, the case that the first message carries the adaptation layer header includes one of following case 2A to case 2C.

In the case 2A, the first message received by the first relay terminal does not carry the adaptation layer header; or the first message received by the first relay terminal carries the adaptation layer header, and the ID field of the adaptation layer header is set as a default value.

In the case 2B, the first message sent by the first relay terminal to the second relay terminal does not carry the adaptation layer header; or the first message sent by the first relay terminal to the second relay terminal carries the adaptation layer header, and the ID field of the adaptation layer header is set as a default value.

In the case 2C, the first message sent by the second relay terminal to the network device does not carry the adaptation layer header; or the first message sent by the second relay terminal to the network device carries the adaptation layer header, and the ID field of the adaptation layer header is set as a default value; or the first message sent by the second relay terminal to the network device carries the adaptation layer header, and the ID field of the adaptation layer header is set as a second ID.

In operation S402, the first terminal receives the first indication information sent by the network device, where the first indication information is used for indicating a first ID.

Taking the first terminal being the first relay terminal and the second terminal being the second relay terminal as an example, the first ID indicated by the first indication information is an adaptation layer ID of the second relay terminal.

The network device sends the first indication information to the first relay terminal, and the first relay terminal receives the first indication information sent by the network device.

Taking the first terminal being the first relay terminal and the second terminal being the remote terminal as an example, the first ID indicated by the first indication information is an adaptation layer ID of the remote terminal.

The network device sends the first indication information to the second relay terminal through at least one third relay terminal or through the Uu interface; the second relay terminal sends the received first indication information to the first relay terminal; and the first relay terminal receives the first indication information sent by the network device.

In the case that the first terminal is the first relay terminal and the second terminal is the remote terminal, the first terminal receives the first indication information sent by the network device in operation S402 in one of a manner A1 and a manner A2.

In the manner A1, the first relay terminal receives the first indication information sent by the network device to the first relay terminal through forwarding of the second relay terminal.

In the manner A2, the first relay terminal receives the first indication information sent by the second relay terminal, where the first indication information is sent by the network device to the second relay terminal.

In the manner A1, the first indication information is sent by the network device sends to the first relay terminal. The network device sends the first indication information to the second relay terminal; and the second relay terminal sends the first indication information to the first relay terminal after the second relay terminal receives the first indication information.

In the manner A2, the first indication information is sent by the network device to the second relay terminal. The network device sends the first indication information to the second relay terminal; and the second relay terminal forwards the first indication information to the first relay terminal after the second relay terminal receives the first indication information.

In operation S403, the first terminal determines that an adaptation layer ID of the second terminal is the first ID based on the first indication information.

After the first terminal receives the first indication information, the first terminal determines the first ID indicated by the first indication information as the adaptation layer ID of the second terminal according to the first indication information.

Taking the first terminal being the first relay terminal and the second terminal being the second relay terminal as an example, after the first relay terminal receives the first indication information, the first relay terminal determines that the first ID indicated by the first indication information is the adaptation layer ID allocated by the network device for the second relay terminal.

Taking the first terminal being the first relay terminal and the second terminal being the remote terminal as an example, after the first relay terminal receives the first indication information, the first relay terminal determines that the first ID indicated by the first indication information is the adaptation layer ID allocated by the network device for the remote terminal.

In the embodiment of the present disclosure, when an adaptation layer ID, i.e., the first ID, is needed to be allocated to the second terminal in the multi-hops relay network, the first message is sent to the first terminal; after the first message is received, the first terminal sends the first message or a first report to the network device to request the first ID allocated by the network device, or request the network device to allocate the first ID to the second terminal; and the first terminal sends the allocated first ID to the network device, thereby completing the allocation of the adaptation layer ID to the second terminal in the multi-hops relay network.

In some embodiments, the manner that the first terminal determines that the first indication information indicates the first ID includes one of a manner B1 to a manner B3.

In the manner B1, the first indication information indicates the first ID based on relationship of timings.

In the manner B2, the first indication information indicates that a first UE ID of the first terminal corresponds to the first ID.

In the manner B3, the first indication information indicates a Layer-2 address information of the second terminal corresponds to the first ID.

In the case that the second terminal is the remote terminal or the second terminal is the second relay terminal, the first terminal determines that the first indication information indicates the first ID in the same manner or different manners.

In an example, the first terminal is UE3. In a case that the communication system structure is UE1-UE2-UE3-network device, the UE3 determines that the first indication information indicates the adaptation layer ID of the UE2 based on the manner B1. In this case, the UE3 is the first relay terminal and the UE2 is the second relay terminal. In a case that the communication system structure is UE2-UE3-UE4-network device, UE3 determines that the first indication information indicates the adaptation layer ID of the UE2 based on the manner B1. In this case, UE2 is the remote device, UE3 is the first relay terminal, and UE4 is presented between the UE3 and the network device.

In an example, the first terminal is UE3. In a case that the communication system structure is UE1-UE2-UE3-network device, the UE3 determines that the first indication information indicates the adaptation layer ID of the UE2 based on the manner B1. In this case, the UE3 is the first relay terminal and the UE2 is the second relay terminal. In a case that the communication system structure is UE2-UE3-UE4-network device, UE3 determines that the first indication information indicates the adaptation layer ID of UE2 based on the manner B2. In this case, the UE2 is the remote device, the UE3 is the first relay terminal, and the UE4 is presented between the UE3 and the network device.

In an example, the first terminal is UE3. In a case that the communication system structure is UE1-UE2-UE3-network device, the UE3 determines that the first indication information indicates the adaptation layer ID of the UE2 based on the manner B2. In this case, the UE3 is the first relay terminal and the UE2 is the second relay terminal. In a case that the communication system structure is UE2-UE3-UE4-network device, the UE3 determines that the first indication information indicates the adaptation layer ID of the UE2 based on the manner B3. In this case, the UE2 is the remote device, the UE3 is the first relay terminal, and the UE4 is presented between the UE3 and the network device.

In the embodiment of the present disclosure, the first terminal is a relay device connected with the second terminal, and the first terminal may be directly connected to the network device or connected to the network device through other relay devices. In a multi-hops relay network in which the remote terminal is connected to the network device through multiple relay terminals, different relay terminals may determine the adaptation layer ID for the previous terminal device in the same manner or different manners.

In an example, in a case that the communication system structure is UE1-UE2-UE3-UE4-network device, the UE2 determines that the first indication information indicates an adaptation layer ID of the UE2 based on the manner B1; the UE3 determines that the first indication information indicates an adaptation layer ID of the UE2 based on the manner B2; and the UE4 determines that the first indication information indicates an adaptation layer ID of the UE3 based on the manner B3.

In an example, in a case that the communication system structure is UE1-UE2-UE3-UE4-network device, the UE2 determines that the first indication information indicates an adaptation layer ID of the UE2 based on the manner B2; the UE3 determines that the first indication information indicates an adaptation layer ID of the UE2 based on the manner B2; and UE4 determines that the first indication information indicates an adaptation layer ID of the UE3 based on the manner B2.

In the manner B1, the first terminal does not send a message to the network device in a duration after sending the first message or the first report to the network device and before receiving the first indication information sent by the network device.

After the first terminal sends the first message or the first report to the network device, the first terminal does not send other messages similar to the first message to the network device and waits for the first indication information sent by the network device, to avoid the confusion in the allocation of the terminal IDs. When the first terminal receives the first information sent by the network device, the first terminal determines that the first indication information indicates the first ID of the first terminal.

In the manner B2, the first indication information is used for indicating a first ID corresponding to a first UE ID of the first terminal. Optionally, the first UE ID is a UE ID of the first terminal for the Uu interface.

In the manner B2, the operation that the first terminal determines that the adaptation layer ID of the second terminal is the first ID based on the first indication information includes: the first terminal determines that the adaptation layer ID of the second terminal is the first ID based on the first ID corresponding to the first UE ID indicated by the first indication information.

After the first terminal receives the first indication information, the first terminal determines that the first indication information indicates the first ID corresponding to the first UE ID, and then determines that the first ID is an adaptation layer ID allocated by the network device for the first terminal corresponding to the first UEID.

In some embodiments, after the first terminal receives the first message sent by the second terminal, the first terminal obtains the first UE ID from the first message.

In the manner B3, the first indication information indicates a first ID for a Layer-2 address of the second terminal.

Optionally, the Layer-2 address is based on the second UE ID of the second terminal. The second UE ID is a UE ID of the first terminal used for the PC5 interface.

In some embodiments, the first message or the first report includes at least one of second indication information or third indication information.

The second indication information is used for indicating a second UE ID of the second terminal.

The third indication information is used for indicating that the second UE ID is required to set up a relay connection.

Optionally, the third indication information is used for instructing the second UE ID to set up the relay connection.

In some embodiments, the first indication information is carried in first adaptation layer configuration information or in dedicated configuration information. Optionally, the first adaptation layer configuration information may be carried in a first adaptation layer configuration message, and the dedicated configuration information may be carried in a dedicated configuration message.

In an example, the first terminal sends the first message to the network device, and the network device feeds back the first adaptation layer configuration information responding to the first message to the first terminal. The first adaptation layer configuration information carries the first indication information.

In an example, the first terminal sends the first message to the network device, and the network device feeds back the dedicated configuration information responding to the first message. The dedicated configuration information carries the first indication information.

In an example, the first terminal sends the first report to the network device, and the network device feeds back the first adaptation layer configuration information to the first terminal. The first adaptation layer configuration information carries the first indication information.

In some embodiments, the first terminal receives a second ID sent by the network device. The second ID is an adaptation layer ID of the first terminal, and carried in the first adaptation layer configuration information, or the second adaptation layer configuration information, or the dedicated configuration information.

Optionally, the first terminal receives the first ID and the second ID sent by the network device through the same piece of configuration information.

In an example, the first indication information and the second ID are carried in the first adaptation layer configuration information.

In an example, the first indication information and the second ID are carried in the dedicated configuration information.

Optionally, the first terminal receives the first ID and the second ID sent by the network device through different pieces of the configuration information.

In an example, the first indication information is carried in the first adaptation layer configuration information, and the second ID is carried in the second adaptation layer configuration information.

In an example, the first indication information is carried in the dedicated configuration information and the second ID is carried in the second adaptation layer configuration information.

Herein, the network device may indicate the adaptation layer ID, i.e., the second ID, of the first terminal, while the network device indicates the first ID to the second terminal based on the first message or the first report sent by the first terminal.

In some embodiments, in a case that the first terminal sends the first report to the network device, the first terminal sends the first message to the network device, and the first message carries the first ID.

As shown in FIG 5, operations S501 to S505 are included.

In operation S501, the first terminal receives the first message sent by the second terminal.

In operation S502, the first terminal sends the first report to the network device.

In operation S503, the first terminal receives the first indication information responding to the first report sent by the network device.

In operation S504, the first terminal determines the first ID based on the first indication information.

In operation S505, the first terminal sends the first message to the network device.

The first message carries the first ID.

In some embodiments, after operation S403, the first terminal receives a second message sent by the network device, where the second message carries the first ID; and the first terminal forwards the second message to the second terminal based on the first ID.

The first terminal maps the current second message to the second terminal based on the first ID carried in the second message. That is to say, the first terminal sends the second message to the second terminal.

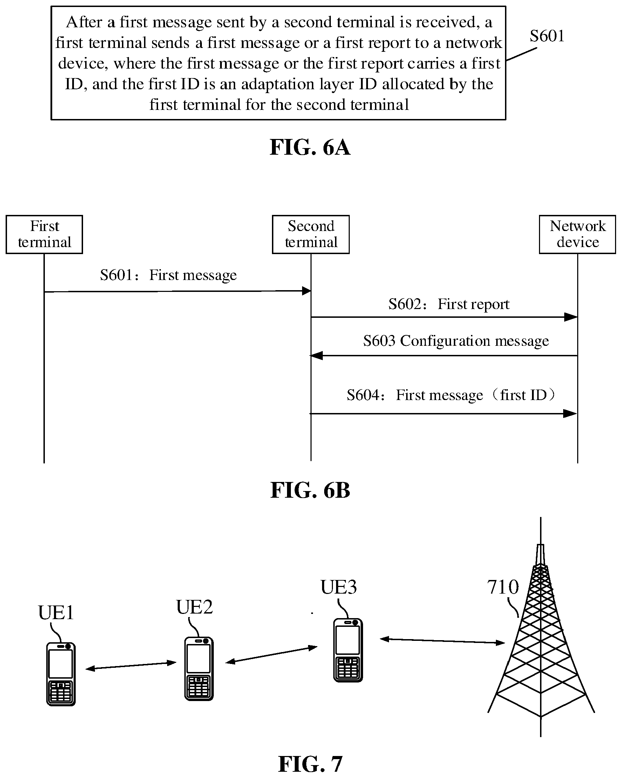

Embodiment of the present disclosure also provides a method for wireless communication, as shown in FIG. 6A, and the method includes operation S601.

In operation S601, after a first message sent by a second terminal is received, a first terminal sends a first message or a first report to a network device, where the first message or the first report carries a first ID, and the first ID is an adaptation layer ID allocated by the first terminal for the second terminal.

After the first terminal receives the first message, the first terminal may send the first message to the network device, and may also send the first report to the network device.

Optionally, the first message includes one of: an RRCSetupRequest message, an RRCResumeRequest message, an RRCResumeRequest1 message, an RRCConfigurationComplete message, or the like.

Optionally, the first report includes a sidelink UE Information message.

In some embodiments, the first terminal sets up a connection with the network device before the first terminal sends the first message or the first report to the network device.

In some embodiments, the first terminal allocates the first ID for the second terminal based on first configuration information.

Taking the first terminal being the first relay terminal and the second terminal being the second relay terminal as an example, the first ID allocated by the first relay terminal for the second relay terminal is not used by other relay terminals connected with the first relay terminal.

Taking the first terminal being the first relay terminal and the second terminal being the remote terminal as an example, the first ID allocated by the first relay terminal for the remote terminal is not used by other remote terminals connected with the first relay terminal.

Optionally, the first configuration information indicates an address space pre-configured by the first terminal, and the first terminal allocates the first ID for the second terminal based on the first configuration information.

Optionally, the address spaces pre-configured for different terminals do not overlap with each other, in this case, the first ID allocated by the first terminal for the second terminal is different from IDs configured for other terminal devices.

In some embodiments, in a case that the first terminal sends the first message to the network device, the method further includes following operation.

The first terminal sends a first report to the network device, where the first report is used for triggering the network device to send configuration information to the first terminal; and the first terminal receives the configuration information sent by the network device.

After the first terminal receives the first message from the second terminal, the first terminal sends the first report to the network device and receives the configuration information sent by the network device. After the first terminal receives the configuration information, the first terminal sends a first message carrying the first ID to the network device.

In a case that the first terminal sends the first message carrying the first ID to the network device, as shown in FIG. 6B the method includes operations S6011 to S6014.

In operation S6011, the first terminal receives the first message sent by the second terminal.

In operation S6012, the first terminal sends the first report to the network device.

In operation S6013, the first terminal receives the configuration information sent by the network device.

In operation S6014, the first terminal sends the first message carrying the first ID to the network device.

In the embodiment of the present disclosure, the first terminal communicates with the second terminal through the PC5 interface.

In some embodiments, the first terminal is a first relay terminal and the second terminal is a second relay terminal. The first relay terminal is a relay terminal that communicates with the network device through the Uu interface. In this case, the second relay terminal communicates with the network device through the first relay terminal.

In the case that the first terminal is the first relay terminal and the second terminal is the second relay terminal, in the communication system shown in FIG. 2, the first terminal is the terminal device 110-1 and the second terminal is the terminal device 110-2.

Optionally, the second relay terminal may also be connected with other relay terminals.

In an example, UE1 is connected to the network device via UE2, UE3 and UE4 in sequence. In this case, the first relay terminal is the UE4 and the second terminal is the UE4.

Optionally, the second relay terminal may also be connected to the remote terminal.

In an example, UE1 is connected to the network device via UE2 and UE3 in sequence. In this case, the first relay terminal is the UE3 and the second terminal is the UE2.

It is to be noted that, in the case that the first terminal is the first relay terminal and the second terminal is the second relay terminal, the second relay terminal is directly connected to the remote terminal or connected to the remote terminal through other relay terminals. In this case, the first relay terminal may also receive the first message or the first report, which is sent by the second relay terminal, indicating that adaptation layer ID is requested for the remote terminal. The first message or the first report carries a first ID, and the first ID may be an adaptation layer ID allocated for the remote terminal by any relay terminal located before the first relay terminal.

Taking the first terminal being a first relay terminal and the second terminal being a remote terminal as an example, the first ID is an adaptation layer ID allocated by the first relay terminal for the remote terminal. The first relay terminal sends the adaptation layer ID allocated for the remote terminal to the network device.

In the case that the first terminal is the first relay terminal, the second terminal is the remote terminal, and at least a second relay terminal is presented between the first relay terminal and the network device, the method includes following operation.

The first relay terminal may send the first report to the network device through the second relay terminal.

The first terminal may send the first report to the second relay terminal; the second relay terminal parses the received first report and generates a second report; and the second relay terminal sends the second report to the network device. If no relay terminal is presented between the second relay terminal and the network device, the second report is a second report sent to the network device; and if a third relay terminal is presented between the second relay terminal and the network device, the second report is a second report sent to the third relay terminal.

In some embodiments, in the case that the first terminal is the first relay terminal and the second terminal is the second relay terminal, the method further includes following operation.

The first relay terminal receives the second configuration information sent by the network device. The second configuration information includes the fourth indication information or the fifth indication information.

The fourth indication information is used for indicating that the adaptation layer ID of the second relay terminal is maintained as the first ID.

The fifth indication information is used for indicating that the adaptation layer ID of the second relay terminal is replaced with a second ID from the first ID.

When the second configuration information received by the first relay terminal includes the fourth indication information, the network device determines that the first ID allocated by the first relay terminal for the second relay terminal is available, and then the first relay terminal continues to use the first ID as the adaptation layer ID of the second relay terminal.

When the second configuration information received by the first relay terminal includes the fifth indication information, the network device determines that the first ID allocated by the first relay terminal for the second relay terminal is unavailable, and then the first relay terminal does not continue to use the first ID as the adaptation layer ID of the second relay terminal and uses the third ID allocated by the network device for the second relay terminal as the adaptation layer ID of the second relay terminal.

Taking the first terminal being the first relay terminal and the second terminal being the second relay terminal as an example, the first ID is the adaptation layer ID allocated by the first relay terminal for the second relay terminal. The first relay terminal sends the adaptation layer ID allocated for the second relay terminal to the network device.

In some embodiments, the first terminal is the first relay terminal and the second terminal is the remote terminal.

Taking the first terminal being the first relay terminal and the second terminal being the remote terminal as an example, at least the second relay terminal is presented between the first relay terminal and the network device, and the communication between the first relay terminal and the network device is forwarded at least through the second relay terminal. In the communication system shown in FIG. 2, the first terminal is the terminal device 110-2 and the second terminal is the terminal device 110-3.

Optionally, the second relay terminal is connected to the network device, that is, the second relay terminal communicates with the network device through the Uu interface. In an example, UE1 is connected to the network device via UE2 and UE3 in sequence. In this case, the remote terminal is the UE1, the first relay terminal is the UE2, and the second relay terminal is the UE3, and the UE3 is connected to the network device.

The first relay terminal sends the first message or the first report to the second relay terminal; and the second relay terminal sends the first message or the first report to the network device.

Optionally, at least one third relay terminal is presented between the second relay terminal and the network device.

In an example, UE1 is connected to the network device through UE2, UE3 and UE4 in sequence. In this case, the remote terminal is the UE1, the first relay terminal is the UE2, the second relay terminal is the UE3, and the UE3 is connected to the third relay terminal UE4.

In an example, UE1 is connected to the network device through UE2, UE3, UE4 and UE5 in sequence. In this case, the remote terminal is the UE1, the first relay terminal is the UE2, the second relay terminal is the UE3, and the third relay terminal includes the UE4 and the UE5. The UE3 is connected to the UE4, and the UE4 is connected to the UE5.

Taking one third relay terminal UE A being presented between the second relay terminal and the network device as an example, the first relay terminal sends the first message or the first report to the second relay terminal; the second relay terminal sends the first message or the first report to the UE A; and the UE A sends the first message or the first report to the network device.

Taking two third relay terminals (UE A, UE B) being presented between the second relay terminal and the network device as an example, the first relay terminal sends the first message or the first report to the second relay terminal; the second relay terminal sends the first message or the first report to the UE A; the UE A sends the first message or the first report to the UE B; and the UE B sends the first message or the first report to the network device.

In the case that one or more third relay terminals are presented between the second relay terminal and the network device, the number of the third relay terminals is not limited in the embodiment of the present disclosure.

In some embodiments, in the case that at least a second relay terminal being presented between the first relay terminal and the network device, the first ID is modified by the second relay terminal as a fourth ID, and the fourth ID is an adaptation layer ID allocated by the second relay terminal for the remote terminal.

In the case that the second relay terminal receives the first ID sent by the first relay terminal, the second relay terminal determines that the first ID is unavailable, and then the first ID is modified to be the fourth ID. The fourth ID is an adaptation layer ID allocated by the second relay terminal for the remote terminal.

In the embodiment of the present disclosure, when the first relay terminal sends the first message carrying the first ID to the second relay terminal, or the first relay terminal sends the first report carrying the first ID to the second relay terminal, the second relay terminal may read the first ID sent by the first relay terminal and determine whether the first ID is available. When a determination result is that the first ID is unavailable, the second relay terminal modifies the first ID as the third ID; and sends the third ID to the network device through the first message or the second report. When the determination result is that the first ID is available, the second relay terminal dose not modifies the first ID; and sends the first ID to the network device through the first message or the second report.

In practical applications, any one relay terminal presented between the first relay terminal and the network device may modify the ID allocated for the remote terminal and required to be carried in the received first message or the first report, and the ID is modified to be the adaptation layer ID allocated for the remote terminal device by the relay terminal itself.

In an example, the remote terminal is UE1, and UE1 communicates with the network device through relay terminals UE2, UE3, UE4, UE5 in turn, then the UE2 allocates the adaptation layer ID as ID1 for UE1; the UE2 sends the ID1 to the UE3; the UE3 determines whether the ID1 is available, if the ID1 is available, the UE3 sends the ID1 to the UE4, and if the IDlis not available, the UE3 modifies the ID1 to be an ID2 and sends the ID2 to the UE4; the UE4 determines whether the received ID1 or ID2 is available, if the ID1 or ID2 is available, the UE 4 sends the ID1 or ID2 to the UE5, and if the ID1 or ID2 is available, the UE4 modifies the ID1 or ID2 to be an ID3 and sends the ID3 to the UE5, and so on.

In some embodiments, the first relay terminal receives second configuration information sent by the network device. The second configuration information includes fourth indication information, fifth indication information or sixth indication information.

The fourth indication information is used for indicating that the adaptation layer ID of the remote terminal is maintained as the first ID.

The fifth indication information is used for indicating that the adaptation layer ID of the remote terminal is replaced with a third ID from the first ID, where the third ID is the adaptation layer ID allocated by the network device for the remote terminal

The sixth indication information is used for indicating that the adaptation layer ID of the remote terminal is replaced with a fourth ID from the first ID, where the fourth ID is the adaptation layer ID allocated by the second relay terminal for the remote terminal.

When the second configuration information received by the first relay terminal includes the fourth indication information, and the network device determines that the first ID allocated by the first relay terminal for the remote terminal is available, then the first relay terminal continues to use the first ID as the adaptation layer ID of the remote terminal.

When the second configuration information received by the first relay terminal includes the fifth indication information, and the network device determines that the first ID allocated by the first relay terminal for the remote terminal is unavailable, then the first relay terminal uses the third ID allocated by the network device for the remote terminal as the adaptation layer ID of the remote terminal, rather than continuing to use the first ID as the adaptation layer ID of the remote terminal.

When the second configuration information received by the first relay terminal includes the sixth indication information, and the network device determines that the first ID allocated by the second relay terminal for the remote terminal is unavailable, then the first relay terminal uses the fourth ID allocated by the network device for the remote terminal as the adaptation layer ID of the remote terminal, rather than using the first ID as the adaptation layer ID of the remote terminal.

In practical applications, in that case that the network device determines that the received adaptation layer ID allocated by the relay terminal for the remote device is available, the network device instruct the first terminal to continue to use the received adaptation layer ID; and when the network device determines that the received adaptation layer ID allocated by the relay terminal for the remote device is unavailable, an adaptation layer ID, i.e. the third ID, is reallocated to the remote device, and it is indicated that the second ID is used as the adaptation layer ID of the remote terminal based on the fifth indication information.

In some embodiments, the first message does not carry an adaptation layer header; or the first message carries an adaptation layer header, and an ID field of the adaptation layer header is set as a default value; or the first message carries the adaptation layer header, and the ID field of the adaptation layer header is set as a second ID. The second ID is the adaptation layer ID of the first terminal.

Taking the first terminal being the first relay terminal and the second terminal being the second relay terminal as an example, the case that the first message carries the adaptation layer header includes one of following case 1A to case 1B.

In the case 1A, the first message received by the first relay terminal does not carry the adaptation layer header; or the first message received by the first relay terminal carries the adaptation layer header, and an ID field of the adaptation layer header is set as the default value.

In the case 1B, the first message sent by the first relay terminal to the network device does not carry the adaptation layer header; or the first message sent by the first relay terminal to the network device carries the adaptation layer header, and the ID field of the adaptation layer header is set as a default value.

Taking the first terminal being the first relay terminal and the second terminal being the remote terminal as an example, the case that the first message carries the adaptation layer header includes one of following case 2A to case 2C.

In the case 2A, the first message received by the first relay terminal does not carry the adaptation layer header; or the first message received by the first relay terminal carries the adaptation layer header, and the ID field of the adaptation layer header is set as a default value.

In the case 2B, the first message sent by the first relay terminal to the second relay terminal does not carry the adaptation layer header; or the first message sent by the first relay terminal to the second relay terminal carries the adaptation layer header, and the ID field of the adaptation layer header is set as a default value.

In the case 2C, the first message sent by the second relay terminal to the network device does not carry the adaptation layer header; or the first message sent by the second relay terminal to the network device carries the adaptation layer header, and the ID field of the adaptation layer header is set as a default value; or the first message sent by the second relay terminal to the network device carries the adaptation layer header, and the ID field of the adaptation layer header is set as a second ID.

In some embodiments, the first terminal further performs the following operations.

The first terminal receives a second message sent by the network device, where the second message carries the adaptation layer ID of the second terminal.

The first relay terminal forwards the second message to the second terminal based on the adaptation layer ID of the second terminal.

The first terminal maps the current second message to the second terminal based on the first ID carried in the second message. That is to say, the first terminal sends the second message to the second terminal.

In the embodiment of the present disclosure, in the method for wireless communication shown in FIG. 4 or FIG. 6, the first relay terminal uses different logical channels to carry a message for which an adaptation layer is used and a message for which the adaptation layer is not used; or the first relay terminal uses a same logical channel to carry a message for which an adaptation layer is used and a message for which the adaptation layer is not used.

Taking the first terminal being the first relay terminal and the second terminal being the remote terminal as an example, in a case that the first relay terminal is not attached to the remote terminal, the first relay terminal does not use the adaptation layer protocol stack to transmit a message with a previous hop of the first relay terminal, i.e., the second relay terminal; and the logical channel used may be a logical channel 1, that is, the reception of the downlink message and the transmission of the uplink message are based on the logical channel 1. When the first relay terminal is attached to the remote terminal, the first relay terminal uses the adaptation layer protocol stack for the transmission of the message, where the logical channel 1 may be kept to be used for receiving the downlink message and sending the uplink message, or the newly added logical channel 2 may be used for receiving the downlink message and sending the uplink message. When the first relay terminal continues to use the logical channel 1 to receive the downlink message and send the uplink message, the transmitted message needs to carry the adaptation layer ID of the first relay terminal or the adaptation layer ID of the remote terminal in the adaptation, so as to distinguish whether the transmitted message belongs to the first relay terminal itself or needs to be forwarded to the remote terminal.

Taking the first terminal being the first relay terminal and the second terminal being the second relay terminal as an example, in the case that the second relay terminal is not attached to the remote terminal, the first relay terminal does not use the adaptation layer protocol stack for the transmission of the message; and the logical channel used may be logical channel 1, that is, the logical channel 1 is used for receiving the downlink message and sending the uplink message. In the case that the second relay terminal is attached to the remote terminal, the first relay terminal uses the adaptation layer protocol stack for the transmission of the message; and the logical channel 1 may be kept to be used for sending the downlink message and receiving the uplink message, or the newly added logical channel 2 may be used for sending the downlink message and receiving the uplink message. In the case that the first relay terminal continues to use the logical channel 1 to send the downlink message and receive the uplink message, the transmitted messages need to carry the adaptation layer ID of the second relay terminal or the adaptation layer ID of the remote terminal in the adaptation, so as to distinguish whether the transmitted message belongs to the first relay terminal itself or needs to be forwarded to the remote terminal.

In some embodiments, the protocol stack of the logical channel is changed from not using an adaptation layer to using an adaptation layer, which is indicated by at least one of the first indication manner or the second manner.

The first indication manner is through the interaction of the signaling.

The second manner is through an indication of a protocol header.

In the first indication manner, the signaling includes at least one of a first signaling or a second signaling.

The first signaling is sent by the first relay terminal to the second relay terminal.

The second signaling is received by the first relay terminal from the second relay terminal.

Optionally, the first relay terminal sends a first signaling to the second relay terminal and receives the second signaling responding to the first signaling from the second relay terminal.

Optionally, the first relay terminal receives the second signaling sent by the second relay terminal; and the second relay terminal sends the first signaling in response to the received second signaling.

In the first indication manner, the change of the protocol stack between the first relay terminal and the second relay terminal is implemented through the interaction between the first signaling and the second signaling.

In some embodiments, the protocol header includes at least one of: a radio link control (RLC) layer header, a media access control (MAC) layer header, or a MAC layer sub-header.

In second manner, the change of the logical channel protocol stack between the first relay terminal and the second relay terminal is implemented through the indication of the header of the protocol.

Hereinafter the communication method according to the embodiment of the present disclosure will be further described with reference to the network structure shown in FIG. 7. The network topology shown in FIG. 7 is: UE1-UE2-UE3-network side 710. The UE2 and the UE3 are relay UEs, the ID1 is the adaptation layer ID of the UE1, and the ID2 is the adaptation layer ID of the UE2.

### First Example

The relay UE determines the user ID sent by the network through the timing.

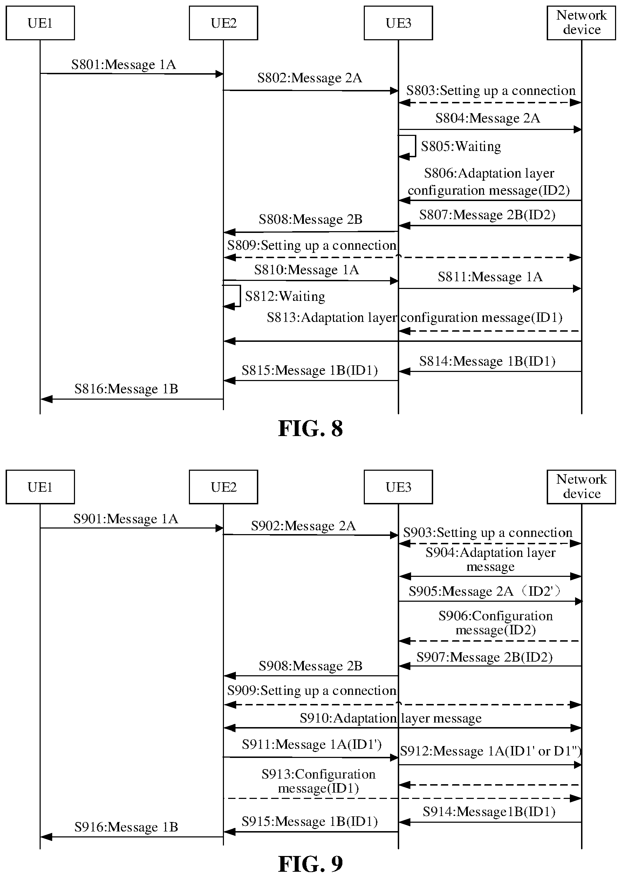

As shown in FIG. 8, operations S801 to S816 are included.

In operation S801, the UE1 sends the message 1A to the UE2.

The message 1A sent by the UE1 may include message such as the RRCSetupRequest message, the RRCResumeRequest message, the RRCResumeRequest1 message, and the RRCConfigurationComplete message, or the like.

The Message 1A sent by the UE1 may not carry an adaptation layer header.

The message 1A sent by UE1 may carry the adaptation layer header, and the adaptation layer header is filled with the default value.

In operation S802, the UE2 sends the message 2A to the UE3.

The message 2A may include message such as the RRCSetupRequest message, the RRCResumeRequest message, the RRCResumeRequest1 message, and the RRCConfigurationComplete message, or the like.

The message 2A sent by the UE2 may not carry the adaptation layer header.

The message 2A sent by the UE2 may carry the adaptation layer header, and the adaptation layer header is filled with the default value.

In operation S803, the UE3 sets up a connection with the network side.

In operation S804, the UE3 sends the message 2A to the network side.

The message 2A sent by the UE3 may not carry the adaptation layer header.

The message 2A sent by the UE3 may carry the adaptation layer header, and the adaptation layer header is filled with the default value.

In operation S805, the UE3 waits for an adaptation layer configuration message including the ID2.

Herein, after the UE3 sends the message 2A to the network side, the UE3 waits for the adaptation layer configuration message including the ID2 sent by the network side. Before the network side sends the adaptation layer configuration message including the ID2, the UE3 does not report any other messages to the network side. The ID2 is the user ID used by the UE2 corresponding to message 2A.

In operation S806, the network side sends the adaptation layer configuration message including the ID2 to the UE3.

In operation S807, the network side sends the ID2-based message 2B to the UE3.

In operation S808, the UE3 forwards the message 2B to the UE2.

Herein, the UE3 identifies that the ID2 is the user ID used by the UE2 and forwards the message 2B to the UE2.

In operation S809, the UE2 sets up a connection with the network side.

In operation S810, the UE2 sends the message 1A to the UE3.

The message 1A sent by the UE2 may not carry the adaptation layer header.

The message 1A sent by the UE2 may carry the adaptation layer header, and the adaptation layer header is filled with the default value.

In operation S811, the UE3 sends the message 1A to the network side.

The message 1A sent by the UE3 may not carry the adaptation layer header.

The message 1A sent by the UE3 may carry the adaptation layer header, and the adaptation layer header is filled with the default value or the ID2.

In operation S812, the UE2 waits for an adaptation layer configuration message including the ID1.

After the UE2 sends the message 1A to the network side, the UE2 waits for the adaptation layer configuration message including the ID1 sent by the network side. Before the network side sends the adaptation layer configuration message including the ID1, the UE2 does not report other messages to the network side. The ID1 is the user ID used by the UE1 corresponding to message 1A.

In operation S813, the network side sends the adaptation layer configuration message including the ID1 to the UE2.

The network may directly send the adaptation layer configuration message including the ID1 to UE3 and UE2 respectively (the message to the UE2 is relayed by the UE3), or the network may only send the adaptation layer configuration message including the ID1 to the UE3, and the UE3 further sends the adaptation layer configuration message including the ID1 to the UE2.

Optionally, the UE2 obtains the ID2.

In operation S814, the network side sends an ID1-based message 1B to the UE3.

In operation S815, the UE3 forwards the message 1B to the UE2.

Herein, the UE3 identifies that the ID1 is the user ID used by the UE1 and forwards the message 1B to the UE2.

In operation S816, the UE2 sends the message 1B to the UE1.

The UE2 identifies that the ID1 is the user ID used by the UE1 and forwards the message 1B to the UE1.

### Second Example

The relay UE determines the user ID sent by the network through the initial ID allocated by itself.

As shown in FIG. 9, operations S901 to S916 are included.

In operation S901, the UE1 sends the message 1A to UE2.

The message 1A sent by the UE1 may include message such as the RRCSetupRequest message, the RRCResumeRequest message, the RRCResumeRequest1 message, and the RRCConfigurationComplete message, or the like.

The message 1A sent by the UE1 may not carry an adaptation layer header.

The message 1A sent by UE1 may carry the adaptation layer header, and the adaptation layer header is filled with the default value.

In operation S902, the UE2 sends the message 2A to the UE3.

The message 2A may include messages such as the RRCSetupRequest message, the RRCResumeRequest message, the RRCResumeRequest1 message, the RRCConfigurationComplete message, or the like.

The message 2A sent by the UE2 may not carry the adaptation layer header.

The message 2A sent by the UE2 may carry the adaptation layer header, and the adaptation layer header is filled with the default value.

In operation S903, the UE3 sets up a connection with the network side.

In operation S904, the UE3 obtains the adaptation layer configuration message from the network.

Herein, the adaptation layer configuration message may be triggered by reporting sidelink UE information.

In operation S905, the UE3 sends the message 2A to the network side.

The message 2A sent by the UE3 contains an ID2' allocated by UE3.

Optionally, the ID2' is not used by other remote UEs.

In operation S906, UE3 waits for the configuration message sent by the network side.

Herein, the configuration information may indicate that:

the UE3 may continue to use the ID2' as the ID2 of the UE2; and

the UE3 uses the ID2 for the ID2'.

If the UE3 allocates in the pre-configured address space, the operation S906 may be omitted.

In operation S907, the network side sends the ID2-based message 2B to the UE3.

In operation S908, the UE3 forwards the message 2B to the UE2.

Herein, the UE3 identifies that the ID2 is the user ID used by the UE2 and forwards the message 2B to the UE2.

In operation S909, the UE2 sets up a connection with the network side.

In operation S910, the UE2 obtains the adaptation layer configuration message from the network.

Herein, the adaptation layer configuration message may be triggered by the reporting sidelink UE information.

In operation S911, the UE2 sends the message 1A to the UE3.

The message 1A sent by the UE2 contains an ID1' allocated by the UE2.

Optionally, the ID1' is not used by other remote UEs as known by the UE2.

In operation S912, the UE3 sends the message 1A to the network side.

The message 1A sent by the UE3 includes a D1' allocated by the UE2 or a D1" after the UE3 modifies the D1'.

Optionally, the D1' or D1" in the message 1A is not used by other remote UEs as known by the UE3.

If the UE2 allocates in the pre-configured address space, the operations S911 and S912 may be omitted.

In operation S913, the UE2 and the UE3 wait for the configuration information sent by the network side.

The network may directly send the configuration information to UE3 and UE2 respectively (the message to the UE2 is relayed by the UE3), or the network may only send the configuration information to the UE3, and the UE3 further sends the configuration information to the UE2.

Herein, the configuration information may indicate:

the UE2 and the UE3 may continue to use the D1'or the D1" in the message 1A as the ID1 for UE1;

the UE2 and the UE3 use the ID1 for the D1'or D1" in the message 1A.

If the UE2 and UE3 allocate in the pre-configured address space, the operation S913 may be omitted.

In operation S914, the network side sends the ID1-based message 1B to the UE3.

In operation S915, the UE3 forwards the message 1B to the UE2.

Herein, the UE3 identifies that the ID1 is the user ID used by the UE1 and forwards the message 1B to the UE2.

In operation S916, the UE2 sends the message 1B to the UE1.

The UE2 identifies that the ID1 is the user ID used by the UE1 and forwards the message 1B to the UE1.

### Third Example

The relay UE determines the user ID sent by the network through reading the UE ID information contained in the initial uplink message

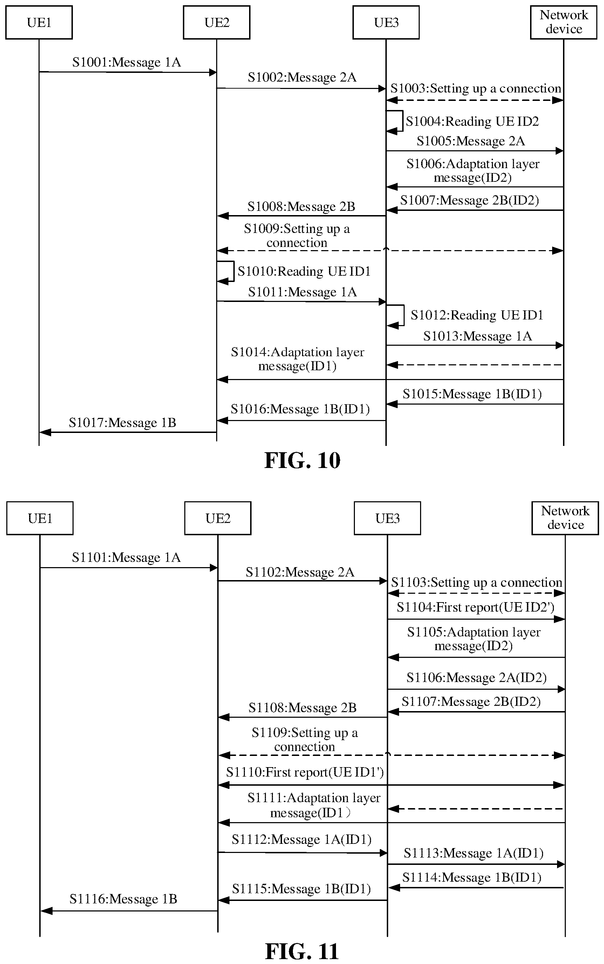

As shown in FIG. 10, operations S1001 to S1017 are included.

In operation S1001, the UE1 sends the message 1A to the UE2.

The message 1A sent by the UE1 may include message such as the RRCSetupRequest message, the RRCResumeRequest message, the RRCResumeRequest1 message, the RRCConfigurationComplete message, or the like.

The message 1A sent by the UE1 may not carry the adaptation layer header.

The message 1A sent by the UE1 may carry the adaptation layer header, and the adaptation layer header is filled with the default value.

In operation S1002, the UE2 sends the message 2A to the UE3.

The message 2A may include message such as the RRCSetupRequest message, RRCResumeRequest message, RRCResumeRequest1 message, the RRCConfigurationComplete, or the like.

The message 2A sent by the UE2 may not carry the adaptation layer header.

The message 2A sent by the UE2 may carry the adaptation layer header, and the adaptation layer header is filled with the default value.

In operation S 1003, the UE3 sets up a connection with the network side.

In operation S 1004, the UE3 reads the UE ID information in the message 2A.

The UE ID2 in the message 2A is the first UE ID of the UE3.

In operation S 1005, the UE3 sends the message 2A to the network side.

The message 2A sent by the UE3 may not carry the adaptation layer header.

The message 2A sent by the UE3 may carry the adaptation layer header, and the adaptation layer header is filled with the default value.

In operation S 1006, the network side sends the adaptation layer configuration message to the UE3.

The adaptation layer configuration message indicates that the UE ID information in the message 2A is the ID2 used by the UE2.

In operation S 1007, the network side sends the ID2-based message 2B to the UE3.

In operation S 1008, the UE3 forwards the message 2B to the UE2.

Herein, the UE3 identifies that the ID2 is the user ID used by the UE2 and forwards the message 2B to the UE2.

In operation S 1009, the UE2 sets up the connection with the network side.

In operation S1010, the UE2 reads the UE ID information in the message 1A.

The UE ID1 in the message 2A is the first UE ID of the UE1.

In operation S1011, the UE2 sends the message 1A to the UE3.

The message 1A sent by the UE2 may not carry the adaptation layer header.

The message 1A sent by the UE2 may carry the adaptation layer header, and the adaptation layer header is filled with the default value.

In operation S1012, the UE3 reads the UE ID information in the message 1A.

In operation S1013, the UE3 sends the message 1A to the network side.

The message 1A sent by the UE3 may not carry the adaptation layer header.

The message 1A sent by the UE3 may carry the adaptation layer header, and the adaptation layer header is filled with the default value or the ID2.

In operation S1014, the network side sends the adaptation layer configuration information to the UE3 and the UE2.

The adaptation layer configuration information indicates that the UE ID information in the message 1A is the ID1 used by the UE1.

The network side may directly send the adaptation layer configuration message to UE3 and UE2 respectively (the message to the UE2 is relayed by the UE3), or the network side may only send the adaptation layer configuration message to the UE3, and the UE3 further sends the adaptation layer configuration message to the UE2.

Optionally, the UE2 obtains the ID2.

In operation S1015, the network side sends the ID1-based message 1B to the UE3.

In operation S1016, the UE3 forwards the message 1B to the UE2.

Herein, the UE3 identifies that the ID1 is the user ID used by the UE1 and forwards the message 1B to the UE2.

In operation S1017, the UE2 sends the message 1B to the UE1.

The UE2 identifies that the ID1 is the user ID used by the UE1 and forwards the message 1B to the UE1.

### Fourth Example

The relay UE determines the user ID sent by the network through the L2 address information in the SUI message reported in advance

As shown in FIG. 11, operations S1101 to S1116 are included.

In operation S1101, the UE1 sends the message 1A to the UE2.

The message 1A sent by the UE1 may include message such as the RRCSetupRequest message, the RRCResumeRequest message, the RRCResumeRequest1 message, the RRCConfigurationComplete message, or the like.

The message 1A sent by the UE1 may not carry the adaptation layer header.

The message 1A sent by the UE1 may carry the adaptation layer header, and the adaptation layer header is filled with the default value.

In operation S1102, the UE2 sends a message 2A to the UE3.

The message 2A may include message such as the RRCSetupRequest message, the RRCResumeRequest message, the RRCResumeRequest1 message, the RRCConfigurationComplete message, or the like.

The message 2A sent by the UE2 may not carry the adaptation layer header.

The message 2A sent by the UE2 may carry the adaptation layer header, and the adaptation layer header is filled with the default value.

In operation S1103, the UE3 sets up a connection with the network side.

In operation S1104, the UE3 sends the first report to the network side.

The first report may be a sidelinkUEInformation message, and includes at least one of:
UE ID2' that is a second UE ID of the UE2; or
an L2 relay connection required to be set up for the UE ID2'.

In operation S1105, the network side sends the ID2 to the UE3.

In operation S1106, the UE3 sends the message 2A to the network side.

The message 2A includes the ID2.

In operation S1107, the network side sends the ID2-based message 2B to the UE3.

In operation S1108, the UE3 sends the first report to the network and forwards the message 2B to the UE2.

Herein, the UE3 identifies that the ID2 is the user ID used by the UE2 and forwards the message 2B to the UE2.

In operation S1109, the UE2 sets up a connection with the network side.

In operation S1110, the UE2 sends the first report to the network side.

The first report may be the sidelinkUEInformation message and includes at least one of:
UE1 ID' that is the second UE ID of UE2; or
an L2 relay connection required to be set up for theUE1 ID'.

In operation S1111, the network side sends the ID1 to the UE2.

The network side may directly send the adaptation layer configuration message to UE3 and UE2 respectively (the message to the UE2 is relayed by the UE3), or the network may only send the adaptation layer configuration message to the UE3, and the UE3 further sends the adaptation layer configuration message to the UE2.

In operation S1112, the UE2 sends the message 1A to the UE3.

The message 1A includes the ID I.

In operation S1113, the UE3 sends the message 1A to the network side.

The message 1A includes the ID1.

In operation S1114, the network side sends the ID1-based message 1B to the UE3.

In operation S1115, the UE3 forwards the message 1B to the UE2.

Herein, the UE3 identifies that the ID1 is the user ID used by the UE1 and forwards the message 1B to the UE2.

In operation S1116, the UE2 sends the message 1B to the UE1.

The UE2 identifies that the ID1 is the user ID used by the UE1 and forwards the message 1B to the UE1.

The adaptation layer configuration message in the operation S813 in the first Example, the operation S913 in the second Example, the operation S1014 in the third Example and the operation S1111 in the fourth Example, may be an adaptation layer configuration message that is sent by the network device to the UE3 and is forwarded by the UE3 to the UE2; or may be an adaptation layer configuration message sent by the network device to the UE2 through the forwarding of the UE3.

In the above Examples, the operations described by dotted lines are optional operations.

In the above Examples, after UE2 sets up the connection with the network device, a change of the protocol stack between the UE2 and the UE3 from not using the adaptation layer to using the adaptation layer may be involved. In order to synchronize the UE2 and the UE3,
- the UE2 and the UE3 use different logical channels to carry a message for which an adaptation layer is used and a message for which the adaptation layer is not used;
- the UE2 and the UE3 use the same logical channel to carry a message for which an adaptation layer is used and a message for which the adaptation layer is not used, but the logical channel changes from not using the adaptation layer to using the adaptation layer.

In the case that the UE2 and the UE3 use the same logical channel to carry a message for which an adaptation layer is used and a message for which the adaptation layer is not used:
1. the case is implemented by interaction between signaling from the UE2 and the signaling from the UE3, for example, the UE2 (or the UE3) sends a message X to the UE3 (or the UE2); the UE3 (or the UE2) sends a message Y to the UE2 (or the UE3); and then the UE2/UE3 starts to communicate according to the new protocol stack (i.e. using adaptation layer); or
2. the RLC/MAC layer header is used for indicating whether the adaptation layer is used.

According to the method for wireless communication provided by the embodiment of the disclosure, during the process that the multi-hops relay terminal forwards the initial uplink message sent by the remote terminal to the base station, the obtaining of the user ID information required to be used by the adaptation layer may be implemented.

Preferred embodiments of the present disclosure have been described in detail with reference to the accompanying drawings, but the present disclosure is not limited to the specific details of the above embodiments. Within the scope of the technical conception of the present disclosure, various simple modifications may be made to the technical scheme of the present disclosure, and these simple modifications all fall within the scope of protection of the present disclosure. For example, each of the specific technical features described in the above specific embodiments may be combined in any suitable manner without contradiction, and various possible combinations are not further described in this disclosure in order to avoid unnecessary repetition. For another example, any combination may be made between the various embodiments of the present disclosure so long as it does not depart from the idea of the present disclosure and is also to be regarded as the present disclosure of the present disclosure. For another example, on the premise of no conflict, each embodiment described in the present disclosure and/or the technical features in each embodiment may be arbitrarily combined with the prior art, and the technical scheme obtained after the combination should also fall within the scope of protection of the present disclosure.

It should be understood that, in various embodiments of the present disclosure, the sequence numbers of the above processes do not imply the sequence of execution, and the sequence of execution of each process should be determined according to its functions and internal logic, and should not constitute any limitation on the implementation process of the embodiments of the present disclosure. Furthermore, in embodiments of the present disclosure, the terms "downlink", "uplink" and "sidelink" are used to represent the transmission direction of the signal or data, where the term "downlink" is used to represent a transmission direction of the signal or data as a first direction transmitted from a site to the user equipment of the cell, the term "uplink" is used to represent a transmission direction of the signal or data as a second direction transmitted from the user equipment of the cell to the site, and the term "sidelink" is used to represent a transmission direction of the signal or data as a first direction transmitted from the user equipment 1 to the user equipment 2. For example, a term "downlink signal" means that the transmission direction of the signal is a first direction. In addition, in embodiments of the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the associated objects is "or".

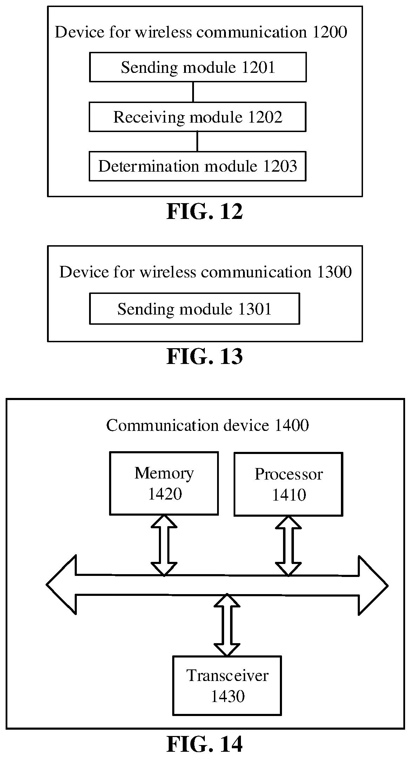

The embodiment of the present disclosure also provides a device for wireless communication 1200, applied to the first terminal as shown in FIG. 12. The device for wireless communication 1200 includes a sending module 1201, a receiving module 1202 and a determination module 1203.

The sending module 1201 is configured to send a first message or a first report to a network device after receiving the first message sent by a second terminal.

The receiving module 1202 is configured to first indication information sent by the network device, where the first indication information is used for indicating a first identity (ID).

The determination module 1203 is configured to determine that an adaptation layer ID of the second terminal is the first ID based on the first indication information.

In some embodiments, the device 1200 further includes a setup module. The setup module is configured to set up a connection with a network device before the first message or the first report is sent to the network device.

In some embodiments, the first terminal is a first relay terminal and the second terminal is a second relay terminal.

The first ID indicated by the first indication information is an adaptation layer ID of the second relay terminal.

In some embodiments, the first terminal is a first relay terminal, and the second terminal is a remote terminal.

The first ID indicated by the first indication information is an adaptation layer ID of the remote terminal.

In some embodiments, at least a second relay terminal is presented between the first relay terminal and the network device.

Communication between the first relay terminal and the network device is forwarded at least through the second relay terminal.

In some embodiments, the receiving module 1202 is further configured to:
receive the first indication information sent by the network device to the first relay terminal through forwarding by the second relay terminal; or, receive the first indication information sent by the second relay terminal, where the first indication information is sent by the network device to the second relay terminal.

In some embodiments,
the first message does not carry an adaptation layer header; or
the first message carries the adaptation layer header, and an ID field of the adaptation layer header is set as a default value; or
the first message carries the adaptation layer header, and the ID field of the adaptation layer header is set as a second ID, and the second ID is an adaptation layer ID of the first terminal.

In some embodiments, the sending module 1201 is further configured not to send a message to the network device in a duration after sending the first message or the first report to the network device and before receiving the first indication information sent by the network device.

The first indication information is used for indicating a first ID corresponding to a first User Equipment (UE) ID of the first terminal.

In some embodiments, the determination module 1203 is further configured to:
determine that the adaptation layer ID of the second terminal is the first ID based on the first ID corresponding to the first UE ID indicated by the first indication information.

In some embodiments, the device 1200 further includes an obtaining module configured to obtain the first UE ID from the first message after receiving the first message sent by the second terminal.

In some embodiments, the first indication information indicates a first ID for a Layer-2 address of the second terminal.

In some embodiments, the first message or the first report includes at least one of: second indication information or third indication information.

The second indication information is used for indicating a second UE ID of the second terminal.

The third indication information is used for indicating that the second UE ID is required to set up a relay connection.

In some embodiments, the first indication information is carried in first adaptation layer configuration information or in dedicated configuration information.

In some embodiments, the receiving module 1202 is further configured to:
receive the second ID sent by the network device, where the second ID is the adaptation layer ID of the first terminal, and the second ID is carried in first adaptation layer configuration information, second adaptation layer configuration information or dedicated configuration information.

In some embodiments, the sending module 1201 is further configured to send the first message to the network device in a case that the first report is sent to the network device, where the first message carries the first ID.

In some embodiments, the receiving module 1201 is further configured to receive a second message sent by the network device, where the second message carries the first ID.

The sending module 1202 is further configured to forward the second message to the second terminal based on the first ID.

In some embodiments, the first relay terminal uses different logical channels to carry a message for which an adaptation layer is used and a message for which the adaptation layer is not used

In some embodiments, the first relay terminal uses a same logical channel to carry a message for which an adaptation layer is used and a message for which the adaptation layer is not used.

In some embodiments, a case that a protocol stack of the logical channel is changed from not using the adaptation layer to using the adaptation layer is indicated by at least one of:
interaction of a signaling; or
an indication of a protocol header.

In some embodiments, the signaling includes at least one of:
a first signaling sent by the first relay terminal to the second relay terminal; or
a second signaling received by the first relay terminal from the second relay terminal.

In some embodiments, the protocol header includes at least one of:
a Radio Link Control (RLC) layer header, a Media Access Control (MAC) layer header, or a MAC layer sub-header.

The embodiment of the disclosure also provides a device for wireless communication applied to the first terminal, as shown in FIG. 13. The device for wireless communication includes a sending module 1301.

The sending module 1301 is configured to send a first message or a first report to a network device after receiving a first message sent by a second terminal, where the first message or the first report carries a first identity (ID), and the first ID is an adaptation layer ID allocated by the first terminal for the second terminal.

In some embodiments, the device 1300 further includes a setup module configured to set up a connection with a network device before sending the first message or first report to the network device.

In some embodiments, the device 1300 further includes a receiving module.

The sending module 1301 is further configured to send a first report to the network device in a case that the first message is sent to the network device, where the first report is used for triggering the network device to send configuration information to the first terminal.

The receiving module is configured to receive the configuration information sent by the network device.

In some embodiments, the device 1300 further includes an allocating module configured to allocate the first ID for the second terminal based on first configuration information.

In some embodiments, the first terminal is a first relay terminal, and the second terminal is a second relay terminal

The first ID indicated by first indication information is an adaptation layer ID allocated by the first relay terminal for the second relay terminal.

In some embodiments, the device 1300 further includes a receiving module configured to receive second configuration information sent by the network device. The second configuration information includes fourth indication information or fifth indication information.

The fourth indication information is used for indicating that the adaptation layer ID of the second relay terminal is maintained as the first ID.

The fifth indication information is used for indicating that the adaptation layer ID of the second relay terminal is replaced with a second ID from the first ID.

In some embodiments, the first terminal is a first relay terminal, and the second terminal is a remote terminal.

The first ID is an adaptation layer ID allocated by the first relay terminal for the remote terminal.

In some embodiments, at least a second relay terminal is presented between the first relay terminal and the network device.

Communication between the first relay terminal and the network device is forwarded through the second relay terminal.

In some embodiments, the first ID is modified by the second relay terminal as a fourth ID, and the fourth ID is an adaptation layer ID allocated by the second relay terminal for the remote terminal.

In some embodiments, the device 1300 further includes a receiving module configured to receive second configuration information sent by the network device. The second configuration information includes: fourth indication information, fifth indication information or sixth indication information.

The fourth indication information is used for indicating that the adaptation layer ID of the remote terminal is maintained as the first ID.

The fifth indication information is used for indicating that the adaptation layer ID of the remote terminal is replaced with a third ID from the first ID, where the third ID is the adaptation layer ID allocated by the network device for the remote terminal.

The sixth indication information is used for indicating that the adaptation layer ID of the remote terminal is replaced with a fourth ID from the first ID, where the fourth ID is the adaptation layer ID allocated by the second relay terminal for the remote terminal.

In some embodiments, the receiving module is further configured to receive a second message sent by the network device. The second message carries the adaptation layer ID of the second terminal.

The sending module 1301 is further configured to forward the second message to the second terminal based on the adaptation layer ID of the second terminal.

In some embodiments, the first relay terminal uses different logical channels to carry a message for which an adaptation layer is used and a message for which the adaptation layer is not used.

In some embodiments, the first relay terminal uses a same logical channel to carry a message for which an adaptation layer is used and a message for which the adaptation layer is not used.

In some embodiments, a case that a protocol stack of the logical channel is changed from not using the adaptation layer to using the adaptation layer is indicated by at least one of: interaction of a signaling; or an indication of a protocol header.

In some embodiments, the signaling includes at least one of:
a first signaling sent by the first relay terminal to the second relay terminal; or
a second signaling received by the first relay terminal from the second relay terminal.

In some embodiments, the protocol header includes at least one of:
a Radio Link Control (RLC) layer header, a Media Access Control (MAC) layer header, or a MAC layer sub-header.

Those skilled in the art will appreciate that the descriptions of the device for wireless communication of the embodiments of the present disclosure may be understood with reference to the descriptions of the method for wireless communication of the embodiments of the present disclosure.

FIG. 14 is a schematic structural diagram of a communication device 1400 according to an embodiment of the present disclosure. The communication device may be a terminal device or a network device. The communication device 1400 shown in FIG. 14 includes a processor 1410 configured to invoke and run a computer program from a memory to implement the method in the embodiments of the present disclosure.

Optionally, as shown in FIG. 14, the communication device 1400 may also include a memory 1420. The processor 1410 may invoke and run a computer program from the memory 1420 to implement the methods in the embodiments of the present disclosure.

The memory 1420 may be a separate device independent of or integrated into the processor 1410.

Optionally, as shown in FIG. 14, the communication device 1400 may also include a transceiver 1430. The processor 1410 may control the transceiver 1430 to communicate with other devices, in particular, to send information or data to other devices, or receive information or data sent by other devices.

The transceiver 1430 may include a transmitter and a receiver. The transceiver 1430 may further include an antenna(s), the number of which may be one or more.

Optionally, the communication device 1400 may be specifically a mobile terminal/terminal device of the embodiments of the present disclosure, and the communication device 1400 may implement the corresponding process realized by the mobile terminal/terminal device in each method of the embodiments of the present disclosure. For the sake of simplicity, it will not be elaborated herein.

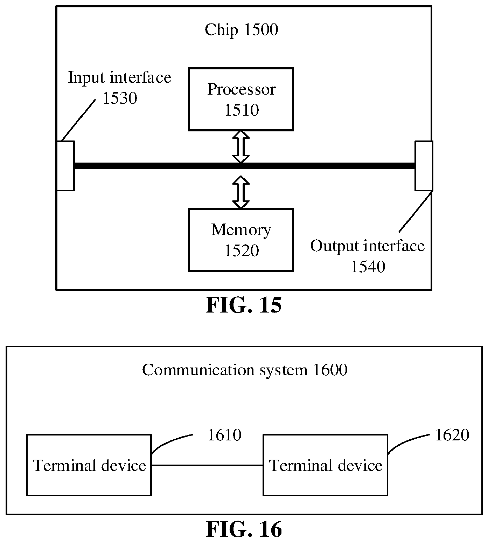

FIG. 15 is a schematic structural diagram of a chip according to an embodiment of the present disclosure. The chip 1500 shown in FIG. 15 includes a processor 1510 configured to invoke and run a computer program from a memory to implement the method in the embodiments of the present disclosure.

Optionally, as shown in FIG. 15, the chip 1500 may also include a memory 1520. The processor 1510 may invoke and run a computer program from the memory 1520 to implement the method in the embodiments of the present disclosure.

The memory 1520 may be a separate device independent of or integrated into the processor 1510.

Optionally, the chip 1500 may also include an input interface 1530. The processor 1510 may control the input interface 1530 to communicate with other devices or chips, and in particular may obtain information or data sent by other devices or chips.

Optionally, the chip 1500 may also include an output interface 1540. The processor 1510 may control the output interface 1540 to communicate with other devices or chips, and in particular may output information or data to other devices or chips.

Optionally, the chip may be applied to the mobile terminal/terminal device in the embodiments of the present disclosure, and the chip may realize the corresponding process realized by the mobile terminal/terminal device in each method of the embodiments of the present disclosure. For the sake of brevity, it will not be elaborated here.

It is to be understood that the chips mentioned in the embodiments of the present disclosure may also be referred to as system level chips, system chips, chip systems or on-chip system chips, etc.

FIG. 16 is a schematic block diagram of a communication system 1600 according to an embodiment of the present disclosure. As shown in FIG. 16, the communication system 1600 includes a terminal device 1610 and a network device 1620.

The terminal device 1610 may be used for implementing the corresponding functions realized by the terminal device in the above methods, and the network device 1620 may be used for implementing the corresponding functions realized by the network device in the above methods. For the sake of simplicity, it will not be elaborated here.

It is to be understood that the processor of the embodiment of the present disclosure may be an integrated circuit chip with signal processing capability. In the implementation process, each step of the above method embodiment may be completed by the instruction in the form of integrated logic circuit of hardware or software in the processor. The above processors may be general purpose processors, digital signal processors (DSPS), application specific integrated circuits (ASICs), field programmable gate arrays (FPGAs) or other programmable logic devices, discrete gate or transistor logic devices, and discrete hardware components. The disclosed methods, steps and logic block diagrams in the embodiments of the present disclosure may be implemented or executed. The general-purpose processor may be a microprocessor or the processor may be any conventional processor or the like. The steps of the method disclosed in connection with the embodiment of the present disclosure may be directly embodied in the execution completion of the hardware decoding processor, or by the combination of the hardware and software modules in the decoding processor. The software module may be located in random memory, flash memory, read-only memory, programmable read-only memory or electrically erasable programmable memory, register and other mature storage media in the art. The storage medium is located in the memory, and the processor reads the information in the memory and completes the steps of the above method in combination with its hardware.

It is to be understood that the memory in the embodiments of the present disclosure may be volatile memory or non-volatile memory, or may include both volatile and non-volatile memory. The nonvolatile memory may be read-only memory (ROM), programmable ROM (PROM), erasable Prom (EPROM), electrically erasable EPROM (EEPROM) or flash memory. Volatile memory may be random access memory (RAM), which is used as an external cache. Many forms of RAM are available, such as static RAM (SRAM), dynamic RAM (DRAM), synchronous DRAM (SDRAM), double data rate SDRAM (DDR SDRAM), enhanced SDRAM (ESDRAM), synchlink DRAM (SLDRAM) and direct Rambus RAM (DR RAM). It is to be noted that the memory of the systems and methods described herein is intended to include, but is not limited to, these and any other suitable types of memory.

It is to be understood that the above described memory is exemplary but not restrictive. For example, the memory in the embodiment of the present disclosure may also be static RAM (SRAM), dynamic RAM (DRAM), synchronous dynamic random access memory (SDRAM), double data rate SDRAM (DDR SDRAM), enhanced SDRAM (ESDRAM), synchronous link DRAM (SLDRAM), direct RAM (DR RAM), etc. That is to say, the memory in the embodiments of the present disclosure is intended to include, but not limited to, these and any other suitable types of memory.

The embodiments of the present disclosure also provide a computer-readable storage medium for storing computer programs.

Optionally, the computer-readable storage medium may be applied to the the mobile terminal/terminal device in the embodiments of the present disclosure, and the computer program enables the computer to execute the corresponding processes implemented by the mobile terminal/terminal device in the various methods of the embodiment of the present disclosure. For the sake of brevity, it will not be repeated herein.

Embodiments of the disclosure also provide a computer program product, including a computer program instruction.

Optionally, the computer program product may be applied to the mobile terminal/terminal device in the embodiments of the present disclosure, and the computer program instruction enables the computer to execute the corresponding processes implemented by the mobile terminal/terminal device in the various methods of the embodiment of the present disclosure. For the sake of brevity, it will not be repeated herein.

Embodiments of the present disclosure also provide a computer program.

Optionally, the computer program may be applied to the mobile terminal/terminal device in the embodiments of the present disclosure. When the computer program runs on the computer, the computer executes the corresponding process realized by the mobile terminal/terminal device in each method of the embodiments of the present disclosure. For the sake of brevity, it will not be described herein.

Those of ordinary skill in the art may realize that the unit and algorithm steps of each example described in combination with the disclosed embodiments herein may be realized by the combination of electronic hardware, or computer software and electronic hardware. Whether these functions are performed in hardware or software depends on the specific application and design constraints of the technical solution. A professional technician may use different methods to implement the described functions for each specific application, but such implementation shall not be considered beyond the scope of the present disclosure.

Those skilled in the art may clearly understand that for the convenience and simplicity of the description, the specific working process of the system, device and unit described above may refer to the corresponding process in the embodiment of the method described above, and will not be described here.

In several embodiments provided by the present disclosure, it should be understood that the disclosed systems, devices and methods may be realized in other ways. For example, the embodiment of the device described above is only schematic. For example, the division of the unit is only a logical function division, and there may be another division method in actual implementation, for example, multiple units or components may be combined or integrated into another system, or some features may be ignored or not implemented. On the other hand, the mutual coupling or direct coupling or communication connection illustrated or discussed may be indirect coupling or communication connection through some interfaces, devices or units, and may be electric, mechanical or other forms.

The unit described as a separation part may or may not be physically separated, and the unit displayed as a unit may or may not be a physical unit, that is, it may be located in one place, or it may be distributed to multiple network units. Some or all of the units may be selected according to the actual needs to achieve the purpose of the embodiment.

In addition, each functional unit in each embodiment of the present disclosure may be integrated in one processing unit, each unit may exist physically alone, or two or more units may be integrated in one unit.

If the function is realized in the form of a software function unit and sold or used as an independent product, it may be stored in a computer readable storage medium. Based on such understanding, the technical solution of the present disclosure, in essence or in the form of a software product, which is stored in a storage medium, includes several instructions for making a computer device (which may be a personal computer, a server, a network device, etc.) to perform all or part of the steps of the method according to each embodiment of the present disclosure. The aforementioned storage media include: U disk, mobile hard disk, read-only memory (ROM), random access memory (RAM), disk or optical disk and other media that may store program code.

The above is only the specific embodiments of the present disclosure, but the scope of protection of the present disclosure is not limited to this. Any person skilled in the technical field who may easily think of change or replacement within the technical scope of the present disclosure shall be covered in the scope of protection of the present disclosure. Therefore, the protection scope of the present disclosure shall be subject to the protection scope of the claims.

## Claims

1. A method for wireless communication, comprising:
after receiving a first message sent by a second terminal device, sending, by a first terminal, the first message or a first report to a network device;
receiving, by the first terminal, first indication information sent by the network device, wherein the first indication information is used for indicating a first identity (ID); and
determining, by the first terminal, that an adaptation layer ID of the second terminal is the first ID based on the first indication information.

2. The method of claim 1, wherein before sending the first message or the first report to the network device, the method further comprises:
setting up, by the first terminal, a connection with the network device.

3. The method of claim 1 or 2, wherein the first terminal is a first relay terminal, and the second terminal is a second relay terminal; and
the first ID indicated by the first indication information is an adaptation layer ID of the second relay terminal.

4. The method of claim 1 or 2, wherein the first terminal is a first relay terminal, and the second terminal is a remote terminal,
the first ID indicated by the first indication information is an adaptation layer ID of the remote terminal.

5. The method of claim 4, wherein at least a second relay terminal is presented between the first relay terminal and the network device,
communication between the first relay terminal and the network device is forwarded at least through the second relay terminal.

6. The method of claim 5, wherein receiving, by the first terminal, the first indication information sent by the network device comprises:
receiving, by the first relay terminal, the first indication information sent by the network device to the first relay terminal through forwarding by the second relay terminal; or
receiving, by the first relay terminal, the first indication information sent by the second relay terminal, wherein the first indication information is sent by the network device to the second relay terminal.

7. The method of any one of claims 1 to 6, wherein
the first message does not carry an adaptation layer header; or
the first message carries the adaptation layer header, and an ID field of the adaptation layer header is set as a default value; or
the first message carries the adaptation layer header, and the ID field of the adaptation layer header is set as a second ID, and the second ID is an adaptation layer ID of the first terminal.

8. The method of any one of claims 1 to 7, wherein
the first terminal does not send a message to the network device in a duration after sending the first message or the first report to the network device and before receiving the first indication information sent by the network device.

9. The method of any one of claims 1 to 7, wherein the first indication information is used for indicating a first ID corresponding to a first User Equipment (UE) ID of the first terminal.

10. The method of claim 9, wherein determining, by the first terminal, that the adaptation layer ID of the second terminal is the first ID based on the first indication information comprises:
determining, by the first terminal, that the adaptation layer ID of the second terminal is the first ID based on the first ID corresponding to the first UE ID indicated by the first indication information.

11. The method of claim 10, wherein after the first terminal receives the first message sent by the second terminal, the method further comprises:
obtaining, by the first terminal, the first UE ID from the first message.

12. The method of any one of claims 1 to 7, wherein the first indication information indicates a first ID for a Layer-2 address of the second terminal.

13. The method of claim 12, wherein the first message or the first report comprises at least one of:
second indication information used for indicating a second UE ID of the second terminal; or
third indication information used for indicating that the second UE ID is required to set up a relay connection.

14. The method of any one of claims 1 to 13, wherein the first indication information is carried in first adaptation layer configuration information or in dedicated configuration information.

15. The method of any one of claims 1 to 14, further comprising:
receiving, by the first terminal, a second ID sent by the network device, wherein the second ID is an adaptation layer ID of the first terminal, and carried in first adaptation layer configuration information, second adaptation layer configuration information or dedicated configuration information.

16. The method of any one of claims 1 to 15, wherein in a case that the first terminal sends the first report to the network device, the method comprises:
sending, by the first terminal, the first message to the network device, wherein the first message carries the first ID.

17. The method of any one of claims 1 to 16, further comprising:
receiving, by the first terminal, a second message sent by the network device, wherein the second message carries the first ID; and
forwarding, by the first terminal, the second message to the second terminal based on the first ID.

18. The method of claim 3 or 5, wherein the first relay terminal uses different logical channels to carry a message for which an adaptation layer is used and a message for which the adaptation layer is not used.

19. The method of claim 3 or 5, wherein the first relay terminal uses a same logical channel to carry a message for which an adaptation layer is used and a message for which the adaptation layer is not used.

20. The method of claim 19, wherein a case that a protocol stack of the logical channel is changed from not using the adaptation layer to using the adaptation layer is indicated by at least one of:
interaction of a signaling; or
an indication of a protocol header.

21. The method of claim 20, wherein the signaling comprises at least one of:
a first signaling sent by the first relay terminal to the second relay terminal; or
a second signaling received by the first relay terminal from the second relay terminal.

22. The method of claim 20, wherein the protocol header comprises at least one of:
a Radio Link Control (RLC) layer header, a Media Access Control (MAC) layer header, or a MAC layer sub-header.

23. A method for wireless communication, comprising:
after receiving a first message sent by a second terminal, sending, by a first terminal, a first message or a first report to a network device, wherein the first message or the first report carries a first identity (ID), and the first ID is an adaptation layer ID allocated by the first terminal for the second terminal.

24. The method of claim 23, wherein before sending the first message or the first report to the network device, the method further comprises:
setting up, by the first terminal, a connection with the network device.

25. The method of claim 23 or 24, wherein in a case that the first terminal sends the first message to the network device, the method further comprises:
sending, by the first terminal, the first report to the network device, wherein the first report is used for triggering the network device to send configuration information to the first terminal; and
receiving, by the first terminal, the configuration information sent by the network device.

26. The method of any one of claims 23 to 25, further comprising:
allocating, by the first terminal, the first ID for the second terminal based on first configuration information.

27. The method of any one of claims 23 to 26, wherein the first terminal is a first relay terminal, and the second terminal is a second relay terminal; and
the first ID indicated by first indication information is an adaptation layer ID allocated by the first relay terminal for the second relay terminal.

28. The method of claim 27, further comprising:
receiving, by the first relay terminal, second configuration information sent by the network device, wherein the second configuration information comprises:
fourth indication information used for indicating that the adaptation layer ID of the second relay terminal is maintained as the first ID; or
fifth indication information used for indicating that the adaptation layer ID of the second relay terminal is replaced with a second ID from the first ID.

29. The method of any one of claims 23 to 26, wherein the first terminal is a first relay terminal, and the second terminal is a remote terminal; and
the first ID is an adaptation layer ID allocated by the first relay terminal for the remote terminal.

30. The method of claim 29, wherein at least a second relay terminal is presented between the first relay terminal and the network device, and
communication between the first relay terminal and the network device is forwarded through the second relay terminal.

31. The method of claim 30, wherein the first ID is modified by the second relay terminal as a fourth ID, and the fourth ID is an adaptation layer ID allocated by the second relay terminal for the remote terminal.

32. The method of any one of claims 29 to 31, further comprising:
receiving, by the first relay terminal, second configuration information sent by the network device, wherein the second configuration information comprises:
fourth indication information used for indicating that the adaptation layer ID of the remote terminal is maintained as the first ID; or
fifth indication information used for indicating that the adaptation layer ID of the remote terminal is replaced with a third ID from the first ID, wherein the third ID is the adaptation layer ID allocated by the network device for the remote terminal; or
sixth indication information used for indicating that the adaptation layer ID of the remote terminal is replaced with a fourth ID from the first ID, wherein the fourth ID is the adaptation layer ID allocated by the second relay terminal for the remote terminal.

33. The method of any one of claims 23 to 32, further comprising:
receiving, by the first terminal, a second message sent by the network device, wherein the second message carries the adaptation layer ID of the second terminal; and
forwarding, by the first relay terminal, the second message to the second terminal based on the adaptation layer ID of the second terminal.

34. The method of claim 27 or 30, wherein the first relay terminal uses different logical channels to carry a message for which an adaptation layer is used and a message for which the adaptation layer is not used.

35. The method of claim 27 or 30, wherein the first relay terminal uses a same logical channel to carry a message for which an adaptation layer is used and a message for which the adaptation layer is not used.

36. The method of claim 35, wherein a case that a protocol stack of the logical channel is changed from not using the adaptation layer to using the adaptation layer is indicated by at least one of:
interaction of a signaling; or
an indication of a protocol header.

37. The method of claim 36, wherein the signaling comprises at least one of:
a first signaling sent by the first relay terminal to the second relay terminal; or
a second signaling received by the first relay terminal from the second relay terminal.

38. The method of claim 36, wherein the protocol header comprises at least one of:
a Radio Link Control (RLC) layer header, a Media Access Control (MAC) layer header, or a MAC layer sub-header.

39. A device for wireless communication, comprising:
a sending module, configured to send a first message or a first report to a network device after receiving the first message sent by a second terminal;
a receiving module, configured to receive first indication information sent by the network device, wherein the first indication information is used for indicating a first identity (ID); and
a determination module, configured to determine that an adaptation layer ID of the second terminal is the first ID based on the first indication information.

40. A device for wireless communication, comprising:
a sending module, configured to send a first message or a first report to a network device after receiving the first message sent by the second terminal, wherein the first message or the first report carries a first identity (ID), and the first ID is an adaptation layer ID allocated by the first terminal for the second terminal.

41. A terminal device comprising: a processor and a memory configured to store a computer program, wherein the processor is configured to invoke and run the computer program stored in the memory to perform the method of any one of claims 1 to 22.

42. A terminal device comprising: a processor and a memory configured to store a computer program, wherein the processor is configured to invoke and run the computer program stored in the memory to perform the method of any one of claims 23 to 38.

43. A chip comprising: a processor configured to invoke and run a computer program from a memory to cause a device on which the chip is mounted to perform the method of any one of claims 1 to 22.

44. A chip comprising: a processor configured to invoke and run a computer program from a memory to cause a device on which the chip is mounted to perform the method of any one of claims 23 to 38.

45. A computer-readable storage medium configured to store a computer program that causes a computer to perform the method of any one of claims 1 to 22.

46. A computer-readable storage medium configured to store a computer program that causes a computer to perform the method of any one of claims 23 to 38.

47. A computer program product comprising computer program instructions that cause a computer to perform the method of any one of claims 1 to 22.

48. A computer program product comprising computer program instructions that cause a computer to perform the method of any one of claims 23 to 38.

49. A computer program causing a computer to perform the method of any one of claims 1 to 22.

50. A computer program causing a computer to perform the method according to any one of claims 23 to 38.
